(19) 

**Europäisches Patentamt**

**European Patent Office**

**Office européen des brevets**

(11) **EP 4 723 546 A1**

(12) **EUROPEAN PATENT APPLICATION**

<table>
<tr><td>(43) Date of publication:<br>08.04.2026 Bulletin 2026/15</td><td>(51) International Patent Classification (IPC):<br><i>H04L 9/32</i> <sup>(2006.01)</sup></td></tr>
<tr><td>(21) Application number: 24306640.4</td><td rowspan="2">(52) Cooperative Patent Classification (CPC):<br>H04L 9/3278; H04L 2209/12</td></tr>
<tr><td>(22) Date of filing: 07.10.2024</td></tr>
</table>

<table>
<tr><td>(84) Designated Contracting States:<br><b>AL AT BE BG CH CY CZ DE DK EE ES FI FR GB<br>GR HR HU IE IS IT LI LT LU LV MC ME MK MT NL<br>NO PL PT RO RS SE SI SK SM TR</b><br>Designated Extension States:<br><b>BA</b><br>Designated Validation States:<br><b>GE KH MA MD TN</b><br><br>(71) Applicant: <b>Secure-IC SAS<br>35510 Cesson-Sévigné (FR)</b></td><td>(72) Inventors:<br>• <b>GUILLEY, Sylvain<br>75013 Paris (FR)</b><br>• <b>LOZAC'H, Florent<br>35530 Servon-sur-Vilaine (FR)</b><br><br>(74) Representative: <b>Atout PI Laplace<br>Immeuble Up On<br>25 Boulevard Romain Rolland<br>CS 40072<br>75685 Paris Cedex 14 (FR)</b></td></tr>
</table>

(54) **A DIFFERENTIAL LOOP PHYSICALLY UNCLONABLE FUNCTION**

(57) There is provided a system comprising Physically Unclonable Function (PUF) circuit (1) comprising two identical loops (12, 14), arranged in parallel, comprising a first loop and a second loop, each loop comprising a number of delay elements arranged in series, each loop forming a Free-Running Oscillator configured to oscillate between two states. One or more challenges are applied to the PUF circuit, each challenge forming a twofold challenge comprising a first challenge applied to the first loop (12) and a second challenge applied to the second loop (14). The PUF circuit (1) also comprises a subtractor (16) configured to receive as inputs the number of oscillations in the first loop and in the number of oscillations in the second loop, for each applied challenge, and determine a difference value corresponding to the difference between the received numbers of oscillations. The system is configured to generate a secret key, comprising a set of bits, during a key generation phase, in response to the application of enrolled challenges to the PUF circuit (1), each bit of the secret key corresponding to an applied enrolled challenge and corresponding to the sign of the difference value provided by the subtractor (16) in response to the applied enrolled challenge, if the difference meets a reliability condition.

**Figure 1**

## Description

The invention generally relates to the field of cryptographic systems, and in particular to methods and devices for generating secret information from a Physically Unclonable Function (PUF).

## BACKGROUND

With the growing need for digital security, cryptography has been implemented in more and more electronic devices with the major challenge of efficiently protecting the secret keys (in symmetric cryptography) and pairs of private/public keys (in asymmetric cryptography).

Traditional approaches for securing electronic devices were based on storing secret bits in a memory. However, such approaches were vulnerable to physical attacks exploiting automated reverse engineering and invasive chip edition.

Physical Unclonable Functions (PUFs) came to the stage when traditional cryptography failed to stand its ground against physical attacks, side-channel attacks, and API attacks.

PUFs are increasingly used in many electronic devices and systems containing secret data to enhance security and make such devices resistant to attacks directed against the devices that try to access secret data (such as for example side-channel attacks, electro-migration, imaging, fault injection, etc.).

A PUF is a physical entity embodied in a physical structure which is the same in each physical instantiation of the physical entity and which generates a specific output, called "response", when provided with an input, called "challenge". The physical structure that contains the PUF consists of at least one random component. The value of the specific response depends on the uniqueness of the physical structure of each instance of the PUF. Minor variations and random physical factors during manufacturing that are unpredictable and uncontrollable make each instantiation of the physical entity embodied within a device unique. Differences between specific outputs are due to minor process and material variations introduced during the manufacturing process.

A PUF can be incorporated in an integrated circuit (such as a CMOS integrated circuit). A PUF can be used in various applications such as authentication of chips, generation of cryptographic keys, seeds of PRNG, etc. Each instance of a Physically Unclonable Function (PUF) device has a unique and unpredictable way of mapping challenges to responses.

The response of a PUF to a given challenge is obtained by submitting the input to the physical system in the form of a stimulus, and mapping the behavior that occurs as a result of an interaction between the stimulus and the physical system to an output.

Physical Unclonable Functions (PUFs) form hardware primitives used to derive values (such as cryptographic keys or chip identifiers), that are intrinsic to each integrated circuit (IC). For example, a volatile secret can be generated from the random delay characteristics of wires and transistors. Because the PUF taps into the random variation during an IC fabrication process, the secret is extremely difficult to predict or extract.

PUFs significantly increase physical security by generating volatile data. Compared to traditional approaches, values generated by PUFs are more secure because they are not stored in some digital memory that can be subject to copy or illicit forge. Indeed, an adversary would need to mount an attack while the IC is powered up, running and using the secret, a significantly harder proposition than discovering non-volatile keys; an invasive attack must accurately measure PUF delays without changing the delays or discover volatile keys in registers without cutting power or tamper-sensing wires that clear out the registers.

All PUFs leverage a number of static entropy sources, responsible to generate the bits of the secrets or of the identifiers (jointly referred to as "PUF value" in the sequel).

The security requirements of PUFs have been formalized in the international standard ISO/IEC 20897. Information security, cybersecurity and privacy protection (part 1 relates to security requirements and part 2 relates to test and evaluation methods).

The main properties of a PUF include:

- A reliability or steadiness property corresponding to the ability for the PUF to re-generate each time the same PUF values, without errors (even considering various environmental conditions, such as fast variations thereof, aging or wearout). It can be expressed in Bit Error Rate (BER), defined as the probability to incorrectly rebuild the whole PUF value or, depending on the context, one of its bit;

- the entropy property corresponding to the fact that the PUF values are non-predictable, and in particular unique per chip instance. Entropy encompasses notions of randomness and uniqueness.

In practice, other properties or aspects of PUFs contribute to making them amenable for use in a mass deployment context. One of such aspects is the easiness of implementation which relates to some hardware constraints to be put in place upon PUF instanciation that shall not be considered as an insurmountable cost of adoption. Another aspect is the ability to achieve the reliability and entropy properties while satisfying performance criteria, such as for example parallelism, fast enrollment time, adaptive control to stop the rebuilding process timely when target reliability is reached, etc. The performance can be further better controlled when the PUF is runtime configurable and provides meaningful feedback.

PUFs must further satisfy some properties related to security, including resistance to physical attacks, such as an attack consisting in forcing PUF value or guessing it through side-channels. For instance, the recording by an attacker of the electromagnetic field emitted by the PUF entropy sources can allow reconstruct the PUF values illegitimately, as analysed in Lars Tebelmann, Jean-Luc Danger, Michael Pehl: Self-secured PUF: Protecting the Loop PUF by Masking. COSADE 2020: 293-314.

A large number of PUF designs has been proposed over the past decades.

Existing PUF designs include for example SRAM PUFs, delay PUFs, Arbiter PUFs or Loop-PUFs.

Some PUFs are directly spawn by the hardware upon power-up, such as the initial value of a memory array, like for example a Static Random Access Memory or SRAM (as described for example in Daniel E. Holcomb, Wayne P. Burleson, Kevin Fu: Power-Up SRAM State as an Identifying Fingerprint and Source of True Random Numbers. IEEE Trans. Computers 58(9): 1198-1210 (2009)) or any other cross-coupled structure, such as for example two memory elements connected back to back (as disclosed for example in Sandeep S. Kumar, Jorge Guajardo, Roel Maes, Geert Jan Schrijen, Pim Tuyls: The Butterfly PUF: Protecting IP on every FPGA. HOST 2008: 67-70). Such structures are referred to as 'weak' PUFs. There is a direct link (usually, a proportionality factor) between the length of the PUF value and the number of static entropy sources.

Some other PUFs feature an input, corresponding to a challenge c (made of bits $c_i$, $1 \leq i \leq n$), which can be selected by the user, and has a challenge length denoted by $n$. This allows querying some entropic elements with different challenges, thereby allowing for a number of PUF values larger than $n$ (for example $N = 2n$ in the case each challenge determines one bit). Such PUFs are termed 'strong' PUFS. Usually, the number of challenges is exponential in $n$, which forbids, from a complexity standpoint, complete PUF recharacterization by an adversary. However, if arbitrarily queried, such PUFs can be learned by an attacker who would leverage a so-called modeling attack. One safe mode of use is to restrict the PUF to certain values of challenges, thereby denying from the attacker standpoint to use any possible challenge. This restriction can be enforced at system level, and performed in such a way that it increases the reliability of PUF values. In practice, strong PUFs are not used with an exponential number of challenges. It is even insecure as the entropy of strong PUFs is not exponential in $n$. Most strong PUFs are used as weak PUFs, i.e. with a limited linear number of challenges that generate as many response bits. However, with strong PUFs, the PUF designer benefits from a very large challenge space to perform an enrollment that does maximize the reliability. This means that with strong PUFs, the PUF designer can select the most suitable challenges from a structure that is minimally designed such as for example with $n$ static entropy sources, controlled by a challenge bit, for rebuilding $N = n$ bits of response (jointly of entropy $N = n$ Shannon bit). In contrast, with weak PUFs, the designer has to over-scale the structure to be sure that there will be enough reliable responses.

Further, some PUFs have capability to re-build and re-enroll, solely by firmware. Obviously, such advanced features impose the PUF to belong to strong-PUF category. This can be advantageous for:

- safety applications for which they offer the ability to soft reboot (e.g., if an hazard is detected, the PUF value shall be warm rebuild without chip-wide hard reboot);

- high-security enabled by the ability to revoke, and re-enroll with other challenges, though leveraging the same entropy sources.

Some existing PUF designs lack controllability for decision making. This means that a PUF cannot be controlled, the PUF values being to be taken "as is", while such values can happen to be suitable, or not, subject to various hazards such as for example :

- Process-Voltage-Temperature (PVT) corners and aging;
- Local technological variation;
- Local IR-drop (where "IR" stands for the instant voltage = Intensity $\times$ Resistance), which is not known until chip-wide scenarios with "real data" are run;
- Power supply noise;
- Accuracy and trustworthiness of gate-level characterizations, due to approximate values or methods.

Such uncertainty sources are detrimental to the industry need for reliable yields.

Further, existing PUF designs can be threatened by the noise. Several classes of noise exist including:

- Noise from the environment, such as powerline instability, crosstalk noise injected by neighboring IP (Intellectual Property) blocks in the vicinity of the PUF, etc.; and
- Local noise.

Local noise can be for example the noise captured by a ring oscillator made up by the sum of several noises. Local noise can be:

(i) thermal noise, or Johnson-Nyquist noise which is white hence uncorrelated (as disclosed in J.B. Johnson, "Thermal Agitation of Electricity in Conductors," pp. 97-109, Jul 1928. Available: https://link.aps.org/doi/10.1103/Phys Rev.32.97);
(ii) flicker noise, or 1/f noise, which is autocorrelated, and also non-stationary.

Local noise also includes a so-called 'shot' noise, or Schottky noise (as disclosed in W. Schottky, "Über spontane Stromschwankungen in verschiedenen Elektrizitatsleitern," Annalen der Physik, vol. 362, p. 541-567, 1918). It has a direct quantum origin, but is negligible at room temperature. As explained by Hajimiri (as disclosed in A. Hajimiri, S. Limotyrakis, and T. Lee, "Jitter and phase noise in ring oscillators," IEEE Journal of Solid-State Circuits, vol. 34, no. 6, pp. 790-804, 1999), when the measurement window is small, the thermal noise is dominating, whereas when the measurement window grows larger, the flicker noise dominates. The thermal noise is considered unpredictable, whereas flicker noise is considered more likely to be observed or manipulated by an attacker (the existence of correlations allows for attacks).

There are two options to address the noise threatening PUF designs. A first option consists in tolerating the noise and a second option, that is much more desirable, consists in getting rid off the noise at all.

Existing approaches to address the noise in PUF designs comprise:

- To 'tolerate' the noise, the PUF can be extremely selective at the enrollment stage, so that only PUF values rebuilt with very high reliability are kept upstream (for measurement);
- A downstream strategy consists in leveraging some error correcting codes, which have nonetheless a limited correction capability and induce an overhead in terms of data (correction capability requires a PUF values generation rate decrease) and of computation (decoding is a hard algorithmic problem).

Some existing PUF designs further lack resistance to side-channel attacks. A side-channel is an observable property that can be measured from a system in order to guess its internal values. Different side-channel attacks can apply to PUFs, and can be classified as active or passive side-channel attacks. In active side-channel attacks, the attacker attempts to disrupt the PUF value, which can be performed by active monitoring and subsequent erasure of value under generation. Passive side-channel attacks are more pernicious as they cannot be detected. They act stealthfully by spying on either the storage of each bit of the "PUF value" (response bits), or the generation process thereof.

Protecting against leakage of the response bits consists in applying "digital data" protection, as described in Trevor Kroeger, Wei Cheng, Sylvain Guilley, Jean-Luc Danger, Naghmeh Karimi: Assessment and Mitigation of Power Side-Channel-Based Cross-PUF Attacks on Arbiter-PUFs and Their Derivatives. IEEE Trans. Very Large Scale Integr. Syst. 30(2): 187-200 (2022). However the protection of generation of the PUF value is a matter of preventing an "analog data" measurement. For example, in delay PUFs, there are several ways an attacker can get access to this side-channel:

- by measuring the time for a token to pass a predefined amount of times in the loop, which can be performed by quantifying it by a number of clock periods; very few PUF designs can leverage this measurement approach, except for characterization purposes;
- by measuring the frequency of a freely oscillating ring, oscillating during a given predefined period of time; this approach is harder in practice, and feasible if only one loop is oscillating at the time (otherwise several frequencies will be measured at once). The loop frequency is intrinsic to the challenge used and to the chip it is implemented in. The role of the loop is to amplify the varying delay of its constitutive gates, owing to local technological dispersion. The more the loop oscillates, the more the intrinsic variability is amplified versus dynamic noise that becomes relatively smaller then.

There is accordingly a need for improved PUF designs capable of providing a reliable PUF presenting controllability for decision making, addressing the noise problem, and having strong resistance to side-channel attacks.

## SUMMARY

To address these and other problems, there is provided an electronic system for generating a secret key comprising a Physically Unclonable Function (PUF) circuit, wherein the PUF circuit comprises two identical loops, arranged in parallel (i.e. spatially in parallel), comprising a first loop and a second loop, each loop comprising a number of delay elements arranged in series, each loop forming a Free-Running Oscillator configured to oscillate between two states. The system is configured to apply one or more challenges to the PUF circuit, each challenge forming a twofold challenge comprising a first challenge and a second challenge, the first challenge being applied to the first loop and the second challenge being applied to the second loop. The PUF circuit comprises a subtractor configured to receive as inputs the number of oscillations in the first loop and in the number of oscillations in the second loop, for each applied challenge, and determine a difference value corresponding to the difference between the received numbers of oscillations.

The system is configured to determine a set of enrolled challenges, during an enrollment phase, by evaluating at least one set of candidate challenges, the evaluation comprising applying one or more candidate challenges to the PUF circuit, which provides a difference value, for each applied candidate challenge, at the output of the subtractor, a candidate challenge being selected as an enrolled challenge if the difference meets a first reliability condition.

The system further comprising a secret key generator configured to generate a secret key, comprising a set of bits, during a key generation phase, in response to the application of one or more enrolled challenges to the PUF circuit, each bit of the secret key corresponding to an applied enrolled challenge and corresponding to the sign of the difference value provided by the subtractor in response to the applied enrolled challenge, if the difference meets a second reliability condition.

In some embodiments, a reliability condition may be evaluated in real-time, in response to the determination of the difference value, the first reliability condition being satisfied if the absolute value of the difference value is strictly larger than a first reliability threshold $T$ and the second reliability condition being satisfied if the absolute value of the difference value is strictly larger than a second reliability threshold $T'$.

Alternatively, a reliability condition may be evaluated in non-real time, in response to the expiration of a timeout value ($w$) after the determination of the difference value.

In some aspects, the system may be configured to iteratively evaluate one or more sets of candidate challenges during one or more iterations, an iteration corresponding to a current set of candidate challenges, a set of candidate challenges being determined from a starting set of challenges, and wherein if no candidate challenge of a current set of candidate challenges is selected as an enrolled challenge in response to the evaluation of a current set of candidate challenges, the current set of candidate challenges is updated from the starting set of challenges, such that, for each challenge of the updated set of candidate challenges, the first challenge is set equal to a given challenge of the starting set of challenges and the second challenge is updated as a function of the first challenge, the system being configured to evaluate the updated set of candidate challenges in the next iteration.

The system may be configured to initialize a first set of candidate challenges from a starting set of challenges comprising, for each candidate challenge, a first challenge and a second challenge both set equal to a given challenge of the starting set, the first set of candidate challenges being evaluated in the first iteration.

The update of the second challenge comprises setting the second challenge equal to the first challenge minus a selected constant value.

In some embodiments, each set of candidate challenges may be determined from a starting set of challenges and a second starting set of challenges, the first challenge and the second challenge of each candidate challenge of a set of candidate challenges being independent, the first challenge being determined from the first starting set of challenges and the second challenge being determined from the second starting set of challenges, and wherein if the current set of challenges is empty, in response to the evaluation of a current set of candidate challenge, the current set of challenge is updated from the starting set of challenges and the second challenge is updated from the second starting set of challenges, the system being configured to evaluate the updated set of candidate challenges in the next iteration.

A starting set of challenges may be determined from a Hadamard code.

In some aspects, the system comprises a characterizing unit configured to apply the set of enrolled challenges, measure the output of at least one of the two loops for each application of an

enrolled challenge, which provides a measure of the loop output for each application of an enrolled challenge, and determine at least one characterizing parameter from the measures of the loop output.

The at least one characterizing parameter comprise may comprise a noise variance and/or a signal variance.

The characterization unit may be further configured to determine the signal to noise ratio from the noise variance and the signal variance, according to:

$$SNR = t\, \Sigma^2 / \sigma^2,$$

where t denotes an oscillating time window, $\sigma^2$ denotes the noise variance and $\Sigma^2$ denotes the signal variance.

The system may further comprise an anomaly detector configured to determine if an anomaly condition related to a reference threshold is satisfied from the difference provided by the subtractor.

In one embodiment, the reference threshold may correspond to the largest difference measured at the output of the subtractor during the enrollment phase.

There is further provided a method of generating a secret key using a Physically Unclonable Function (PUF) circuit, wherein the PUF circuit comprises two identical loops, arranged in parallel, comprising a first loop and a second loop, each loop comprising a number of delay elements arranged in series, each loop forming a Free-Running Oscillator configured to oscillate between two states.

The method comprises:

i. applying one or more challenges to the PUF circuit, each challenge forming a twofold challenge comprising a first challenge and a second challenge, the first challenge being applied to the first loop and a second challenge being applied to the second loop,

ii. for each applied challenge, determining a difference value corresponding to the difference between the number of oscillations in the first loop and the number of oscillations in the second loop.

The method comprises determining a set of enrolled challenges, during an enrollment phase, by evaluating at least one set of candidate challenges, the evaluation comprising performing steps i. and ii. for each candidate challenge of the set of challenges, which provides a difference value, for each candidate challenge, and selecting a candidate challenge as an enrolled challenge if the difference meets a first reliability condition.

The method further comprises generating a secret key, comprising a set of bits, during a key generation phase, the generation of a secret key comprising applying one or more enrolled challenges to the PUF circuit, according to steps i. and ii., each bit of the secret key corresponding to an applied enrolled challenge and corresponding to the sign of the difference value obtained in step ii for the applied enrolled challenge, if the difference value meets a second reliability condition.

**BRIEF DESCRIPTION OF THE DRAWINGS**

The accompanying drawings, which are incorporated in and constitute a part of this specification, illustrate various embodiments of the invention and, together with the general description of the invention given above, and the detailed description of the embodiments given below, serve to explain the embodiments of the invention:

- Figure 1 represents an exemplary electronic system in which the DL-PUF according to embodiments of the disclosure can be implemented.

- Figure 2 depicts an existing SRAM PUF, according to the prior art.

- Figure 3 represents an exemplary arbiter PUF structure, according to the prior art.

- Figure 4 illustrates the full structure of the arbiter PUF, according to the prior art.

- Figure 5 represents a RO-PUF according to the prior art.

- Figure 6 depicts a loop-PUF (L-PUF), according to the prior art.

- Figure 7 represents the structure of a DL-PUF, according to embodiments of the disclosure.

- Figure 8 depicts a hardware implementation of the DL-PUF, according to some embodiments.

- Figure 9 shows a trajectory representing the evolution of the difference value in the time, for different applied challenges.

- Figure 10 represents an exemplary architecture of the DL-PUF using Clock-Domain Crossing (CDC).

- Figure 11 represents exemplary types of Clock-Domain Crossing that may be used by the DL-PUF.

- Figure 12 depicts the structure of the decision making unit, according to some embodiments of the disclosure.

- Figure 13A schematically illustrates the triggering the evaluation of the reliability condition, in two cases (case a and case b).

- Figure 13B shows an exemplary hardware implementation of the reliability condition in case 'case a' represented in figure 13A.

- Figure 13C shows an exemplary hardware implementation of the reliability condition in case 'case b' represented in figure 13A.

- Figure 14 is an exemplary implementation of the decision alarm unit, according to some embodiments.

- Figure 15 depicts exemplary PUF response distributions of the DL-PUF represented by a first diagram (15A) corresponding to the non-real-time comparison case (case a), which is performed after a certain timeout, and a second diagram (15B) corresponding to the real-time comparison (case b), which is performed in real-time.

- Figure 16 represents the method of generating PUF responses using the DL-PUF, according to some embodiments.

- Figure 17 represents the method of characterizing the DL-PUF, according to some embodiments.

- Figure 18 represents the enrollment method implemented during the enrollment phase, according to some embodiments.

- Figure 19 represents the key rebuilding phase, according to some embodiments.

- Figure 20 is a flowchart depicting a method to generate each line in a Sylvester-type Hadamard matrix, according to some embodiments.

- Figure 21 depicts the decision making unit, according to embodiments using anomaly detection.

- Figure 22 depicts an exemplary architecture of the DL-PUF, using an additional Free-Running-Oscillator, according to some embodiments.

- Figure 23 shows comparative diagrams representing the bit response Probability Mass Functions as a function of the differential measurement, in response to different challenges.

## DETAILED DESCRIPTION

Embodiments of the disclosure provide an improved PUF circuit 1, referred to hereinafter as the "DifferentiaL-Loop Physically Unclonable Function" or simply by the abbreviation 'DL-PUF', capable of behaving differentially from a timing standpoint.

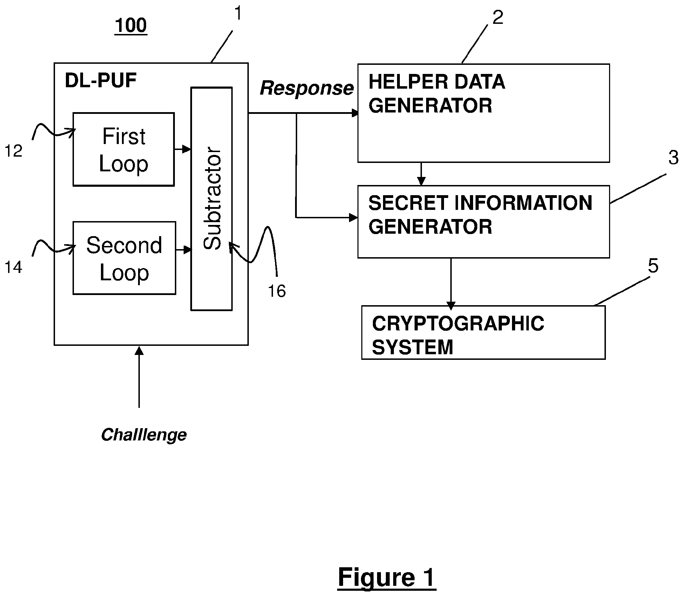

Figure 1 represents an exemplary electronic system 100 in which the DL-PUF 1 according to embodiments of the disclosure can be implemented.

The DL-PUF 1 according to the embodiments of the disclosure comprises two loops 12 and 14, each loop forming a Free-Running Oscillator configured to oscillate between two states, and a subtractor 16 configured to determine a difference, denoted '*diff*', from the output of the two loops, the DL-PUF response to a challenge being determined from this difference.

A Free-Running Oscillator (also denoted by the acronym FRO) consists in a combinational loop, which can be hold still in reset mode, and then made oscillating by enabling it. The loop may be enabled by setting an input signal (also called 'enable signal') to 1, from the reset mode where it is kept at 0. As soon as the enable signal is set to 1, the ring enters a mode where it oscillates freely at its own pace. Any point of the loop subsequently changes from 0 to 1 and vice-versa, at its own frequency. Except if the environment conditions (which can be related for example to the voltage or temperature) change, the oscillation frequency is steady over the time the FRO is enabled. It may occur that the FRO self-induces, meaning for instance that its operation causes some local heating, in which case the frequency can slightly change. However, from one run (oscillation from an enable turned from 0 to 1) to another, the evolution of the frequency over time, in same environmental conditions, is same. The only difference is that, from one execution to the other, some dynamic noise may cause jitter in the oscillation count. The longer the oscillation, the less the impact of the dynamic noise on the frequency estimation, i.e., the frequency estimation gets more accurate.

The system 100 can be an electronic or digital system comprising a DL-PUF 1 for generating a PUF output (response) and a helper data generator 2 configured to generate a helper data comprising a set of bits, a bit of the helper data being generated in association with each applied challenge. The helper data generator 2 may be configured to generate each helper data bit from the output provided by the DL-PUF 1 in response to the application of the associated challenge.

The system 100 may further comprise a key generator 3 for generating a secret key during the key rebuilding phase from the helper data and the difference value measured during the key rebuilding phase.

The secret key generation corresponds to a key rebuilding phase (also called 'key generation' phase). The key generator 3 may be configured to receive as inputs:

- the helper data; in the case of the DL-PUF 1, the helper data may be a bit field representing a binary decision to select or to prune each challenge from a pre-determined list, and

- information identifying the specific device for which the helper data have been determined as relevant.

The key generator 3 may be further configured to receive as inputs:

- a first set of parameters which have been set pre-silicon (such as for example the size of each loop),
- a second set of parameters that result from the post-silicon characterization step (such as for example the time window w).

The system 100 may further comprise a cryptographic device 5 configured to use the secret key generated by the key generator 3.

The cryptographic device 5 may use the secret key in one or more cryptographic algorithms and service including for example encryption/decryption, authentication, and digital signature. The cryptographic device may be implemented in various electronic or computer systems such as a smartcard, a mobile device, a smart IoT device, etc.

The system 100 may be for example an electronic circuit device including an integrated Circuit (IC) and/or programmable logic such as a field-programmable gate array (FPGA), a microprocessor, a digital signal processor (DSP), etc.

In one application of the invention, the key generator 3 may be a cryptographic key comprising a set of bits. In such application, the key is generated from the system 100 whenever the key is needed by the system.

The DL-PUF 1 is configured to produce a measurable output (referred to as a "response") when queried with a certain input (referred to as a "challenge").

The DL-PUF is not a "function" in the mathematical sense. Indeed, a challenge applied to the DL-PUF 1 may have more than one possible response. However, the number of possible answers to a given challenge is limited and is desirably equal to only one. The DL-PUF 1 therefore designates the process performed by or acting upon a particular physical system.

The pair formed by an applied challenge and the corresponding measured response is referred to as a challenge-response pair. The relation between challenges and responses generated by DL-PUF 10 is referred to as the Challenge Response Pair behavior of the DL-PUF.

The sequence of challenges applied to the DL-PUF 10 and the responses obtained as the result of the application of each challenge comprise a sequence of bit strings. A challenge-response pair is coupled to a unique physical device (this corresponds to the "unclonable" property of a PUF).

Each challenge applied to the DL-PUF 10 comprises a set of bits (or "string of bits"). A challenge may be represented by a vector of bits. To generate a k-bit cryptographic key at the key generator 3, at least k challenges may be applied, each challenge being used to produce a bit of the cryptographic key.

The DL-PUF 1 may have three life cycle phases (or states):

- During a characterization phase, a measurement window w is determined for the DL-PUF 1 to reach its expected reliability. This operation is carried out in representative conditions, called « PVT corners » (P standing for Process, V standing for Voltage, and T standing for Temperature).

Depending on the priority on rebuild time (that is to be minimized) or the entropy (that is to be maximized), a rate $r$ may be determined.

- The chip devices are then ready to be enrolled in an enrollment phase. The enrollment phase consists in pruning a proportion $r$ of challenges that lead to unreliable responses. This operation is done prior to the first use of the chip devices, and can be repeated later on, for example in case the chip device has to be repurposed or if, due to aging or damage (e.g., by a Single Event Upset or 'SEU'), a re-enrollment is required, even in the field (i.e. in mission mode).

- In a key rebuilding phase, the PUF can be then operated.

During the enrollment phase, a set of challenges is applied to the DL-PUF 1 and the difference 'diff' provided by the DL-PUF 1 is measured in response to each challenge.

During the enrollment phase, a set of challenge-response pairs are determined (the set of challenge-response pairs comprises a training set of K challenges (also called 'enrollment set of challenges') and a set of K corresponding responses. The training set of challenges may be pruned during the enrollment based on one or more pruning criteria. Therefore, the enrollment phase is started with a initial set of challenges that may be reduced to K challenges, if pruning is applied according to the pruning criteria, during the enrollment phase.

A helper data comprising at least K bits is then generated (by the helper data generator 2) by applying the K challenges of the training set of challenges, each challenge being used to generate a bit of the helper data. For each challenge, the response obtained at the DL-PUF output in response to the applied challenge may be measured, and the helper data bit may be determined from the DL-PUF output. The training set of challenges and the helper data thus obtained may be stored in a memory (local or external memory).

In the key rebuilding phase, a K-bit cryptographic key may be generated, by the key generator 3, by applying the K challenges of the training set of challenges to the DL-PUF 1. For each challenge among the K challenges of the training set of challenges, a key bit may be determined from the helper data bit corresponding to the applied challenge (as determined by the helper data generator 2) and from the response output by the DL-PUF in response to the challenge applied during the key rebuilding phase.

According to the embodiments of the disclosure, the challenge applied to the DL-PUF 1 is a twofold challenge comprising a first challenge $c$ to be applied to the first loop 12 of the DL-PUF 1 and a second challenge c' to be applied to the second loop 14 of the DL-PUF 1.

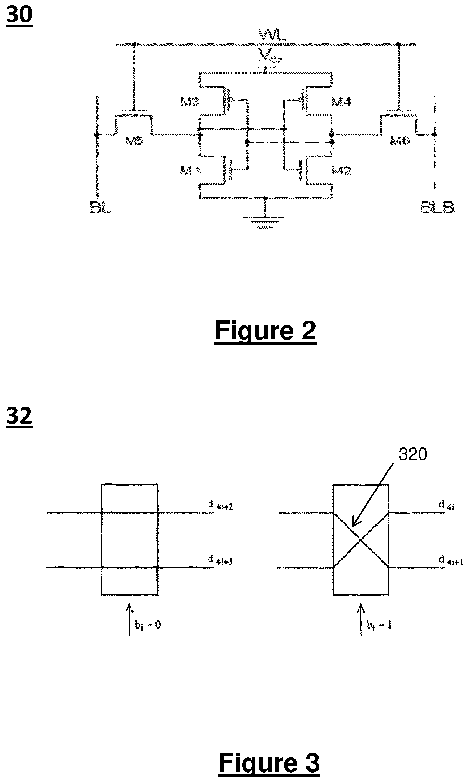

To facilitate the understanding of the DL-PUF 1 according to the embodiments of the disclosure, some existing PUF designs are first described with reference to figures 2 to 5.

Figure 2 depicts an existing SRAM PUF, according to the prior art. The SRAM PUF 30 represented in figure 2 is more specifically a dual-port 6-transistor balanced SRAM memory point.

In memory technologies, the SRAM points are minimized in area, hence do not feature a reset value. Therefore SRAM values start uninitialized. Besides, depending on the SRAM technology, the SRAM points are symmetrical, in that they do not have any preferred value. This is guided by the SRAM technology, which consists in a differential programmation and most importantly readout of the value. As shown in figure 2, a typical structure 30 for the SRAM memory point is called 6T ("6 transistors") because it uses 6 transistors M1, M2, M3, M4, M5 and M6.

Some silicon technologies have in their ecosystem eligible providers of SRAM of such very structure, so that it happens to be amenable for constituting a PUF entropy source (as disclosed in Pierre Bayon, Lilian Bossuet, Alain Aubert, Viktor Fischer, François Poucheret, Bruno Robisson, Philippe Maurine: Contactless Electromagnetic Active Attack on Ring Oscillator Based True Random Number Generator. COSADE 2012: 151-166 Daniel E. Holcomb, Wayne P. Burleson, Kevin Fu: Power-Up SRAM State as an Identifying Fingerprint and Source of True Random Numbers. IEEE Trans. Computers 58(9): 1198-1210 (2009)). Therefore, in theory, $N$ bits of SRAM can yield $N$ bits of static entropy for a PUF. However, in practice, not all SRAM memory points are reliable. As a result, an enrollment is necessary and the entropy of an SRAM PUF 30 is only a fraction (usually estimated as one tenth) of the number of SRAM bits.

Further, some SRAM memory points are not symmetrical, such as the single-port 5-transistor (5T) structure. In such cases, derivatives are required.

Other weak PUFs are based on incompletely fabricated vias obtained by violating the design rules resulting in either connected or disconnected inter-metallic vias (as disclosed in Teddy Kyung Lee: Via PUF Technology as a Root of Trust in IoT Supply Chain, GSA whitepaper. Online : https://www.gsaglobal.org/forums/via-puf-technology-as-a-root-of-trust-in-iot supply-chain/), or on intentional dielectric probabilistic breakdown (as disclosed for example in Meng-Yi Wu, Tsao-Hsin Yang, Lun-Chun Chen, Chi-Chang Lin, Hao-Chun Hu, Fang-Ying Su, Chih-Min Wang, James Po-Hao Huang, Hsin-Ming Chen, Chris Chun-Hung Lu, Evans Ching-Song Yang, Rick Shih-Jye Shen: A PUF scheme using competing oxide rupture with bit error rate approaching zero. ISSCC 2018: 130-132). Often, the classification of such structures as PUFs has been disputed as they rely on a hardware structure that can be observed even when powered-down.

Figure 3 represents an exemplary arbiter PUF structure 32, according to the prior art, as disclosed in Blaise Gassend, Dwaine E. Clarke, Marten van Dijk, Srinivas Devadas: Delay-Based Circuit Authentication and Applications. SAC 2003: 294-301.

Arbiter PUFs are the first kind of delay PUFs. Figure 3 depicts an individual switching element, controlled by one bit of a challenge word.

The approach of the arbiter PUF 32 is to have two signals run in parallel in a race through elements that are either transmitting them straight or swapping them. The pairs of paths (straight versus swapped) are supported by different hardware, hence affected by different static noise. This noise determines at the switching element level 320 the speed advantage of one signal versus its contender. The arbiter PUF 32 is named after the decision making block which determines the response of the PUF under a given challenge.

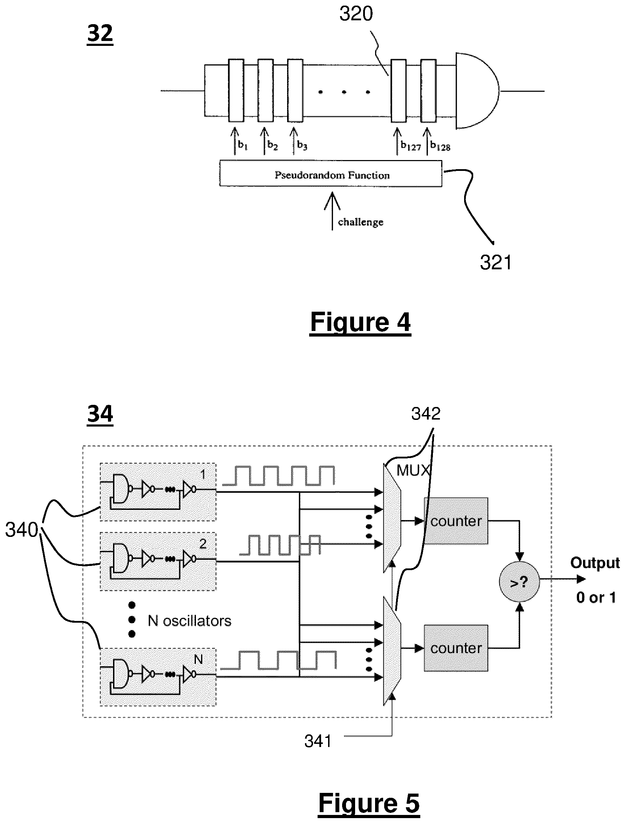

Figure 4 illustrates the full structure of a conventional arbiter PUF, made up of 128 switches 320. The role of the arbiter PUF 32 is to decide which signal in the pair of concurrent signals is arriving first. This order determines the outcome of the race, as a binary answer, as illustrated by figure 4. The arbiter PUF 32 must select the fastest signal without any offset in the determination. Otherwise the PUF 32 is flawed by a so-called "architectural bias". In practice this means that the arbiter shall behave the same irrespective its inputs.

Some arbiter PUFs 32 have been attacked by machine learning attacks, which, after a training phase, are capable of guessing with high probability the response obtained from unseen challenges. Hence some derivatives have been proposed, such as the obfuscated PUF. One way to implement this is to use a pseudorandom function 321 between the challenge and the bits controlling the switches (named $b_1$, ..., $b_{128}$) as shown in figure 4.

Figure 5 represents a RO-PUF 34 according to the prior art, as disclosed in G. Edward Suh, Srinivas Devadas: Physical Unclonable Functions for Device Authentication and Secret Key Generation. DAC 2007: 9-14. The RO-PUF 34 is a structure leveraging ring oscillators (RO). In such structure, the comparison (i.e. PUF value bit determination) occurs downstream. In this article, the term "frequency" is used to characterize the oscillation speed of a loop fed by a token at some time (being the origin of time). In practice, the frequency is evaluated by counting the number of oscillations of the loop in a given amount of time, or by measuring the time taken for the loop to oscillate a predetermined amount of times.

In the RO-PUF 34 represented in figure 5, the Free-Running Oscillators (FROs) 340 are not controlled by a challenge. The challenge is rather the input 341 of multiplexors 342 that allow choosing a pairs of FROs. In this structure, the FROs 340 are identical copies of the same FRO. This raises concerns regarding the threat of FRO coupling one with each other, such as when a single FRO is manipulated very accurately from outside of the chip, by exercising the threat in a strong harmonic environment.

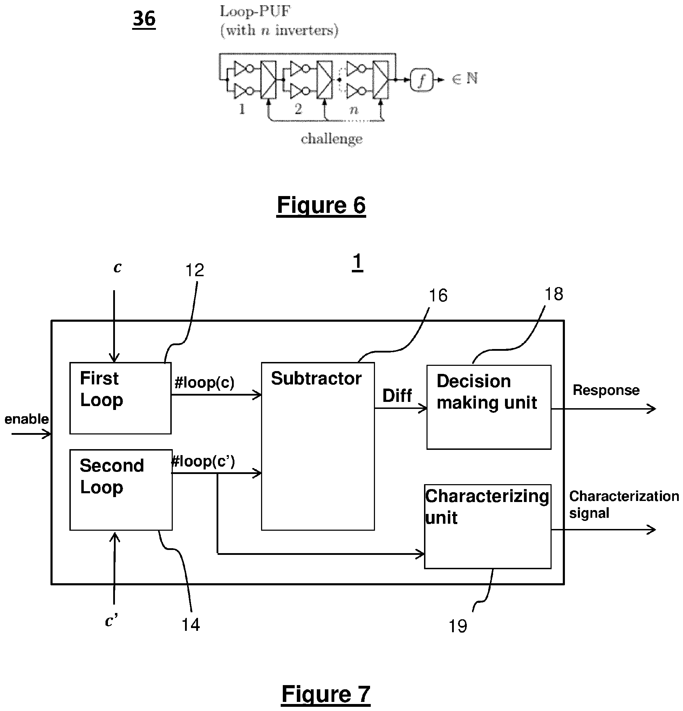

Figure 6 depicts a loop-PUF (L-PUF) 36 according to the prior art, as disclosed in in FR2955394 and in Zouha Cherif, Jean-Luc Danger, Sylvain Guilley, and Lilian Bossuet, "An easy-to-design PUF based on a single oscillator: The loop PUF," in Proc. 15th Euromicro Conf. Digit. Syst. Design, Sep. 2012, pp. 156-162.

A L-PUF 36 consists in the use of a single loop, being a FRO. However, contrary to the RO-PUF 34 illustrated in figure 5, the elements making up the loop are not "passive", but "active". Active elements refer to elements controlled by a signal (corresponding to one challenge bit, $1 \leq i \leq n$). The loop in the L-PUF 36 therefore consists in controllable delays. The delay element has to be designed to be the same, let apart technological dispersion, irrespective of the challenge bit value. In practice, the loop of a L-PUF 36 also features an input to start and stop the oscillations.

Developments of the L-PUF technology were disclosed in:

- Jean-Luc Danger, Sylvain Guilley, and Alexander Schaub, "Two-metric helper data for highly robust and secure delay PUFs," in Proc. IEEE 8th Int. Workshop Adv. Sensors Interfaces (IWASI), Jun. 2019, pp. 184-188, which describes two-Metric Helper Data (TMHD) scheme, configured to resist to helper data manipulation attacks.

- US1 1038680 B2, which discloses several embodiments of the approach proposed in the previous document, which can apply to delay PUFs in general, and to the L-PUF in particular.

- Alexander Schaub, Jean-Luc Danger, Olivier Rioul, Sylvain Guilley: The Big Picture of Delay-PUF Dependability. ECCTD 2020, which discloses a formalization of L-PUF reliability and entropy, even when considering (slightly) correlated responses under some different challenges.

- Lars Tebelmann, Jean-Luc Danger, and Michael Pehl, "Self-secured PUF: Protecting the loop PUF by masking," in Constructive Side-Channel Analysis and Secure Design, G. M. Bertoni and F. Regazzoni, Eds. Cham, Switzerland: Springer, 2020, pp. 293-314 which discloses improvement about the extraction of multiple bits of response per challenge.

- Lars Tebelmann, Jean-Luc Danger, Michael Pehl: Interleaved Challenge Loop PUF: A Highly Side-Channel Protected Oscillator-Based PUF. IEEE Trans. Circuits Syst. I Regul. Pap. 69(12): 5121-5134 (2022) which discloses the interleaved challenge L-PUF (ICLooPUF), where the two challenges c and not(c) are not applied one after the other, but interleaved.

- Julien Béguinot, Wei Cheng, Jean-Luc Danger, Sylvain Guilley, Olivier Rioul, Ville Yli-Mäyry: Reliability of Ring Oscillator PUFs with Reduced Helper Data. IWSEC 2023: 36-56, which discloses an approach to keep same or even improve reliability with shorter helper data.

According to the conventional L-PUF 36, two consecutive challenges, selected as c and not($c$), where not($c$) is the bitwise complement of $c$, shall be submitted to the L-PUF 36 to derive one response bit, corresponding to sign(#loop(c) - #loop(not(c))), which is a bit.

Figure 7 represents the structure of a DL-PUF 1, according to embodiments of the disclosure.

The DL-PUF 1 (differential Loop-PUF) comprises a controlled loop structure consisting of two controlled loops 12 and 14.

Each loop 12 and 14 comprises a number of delay elements arranged in series and forms a Free-Running Oscillator (FRO) configured to oscillate between two states.

The subtractor 16 is configured to receive as inputs the number of oscillations in the first loop 12 (denoted #loop(c)) and in the number of oscillations in the second loop 14 (denoted #loop(c')), for each challenge applied to the DL-PUF 1, and determine a difference value corresponding to the difference between the received numbers of oscillations. The output of the first loop 12, namely #loop(c), and the output of the second loop 14, namely #loop(c'), thereby correspond to count values (i.e. number of oscillations in the loop).

The challenge applied to the DL-PUF 1 is a twofold challenge comprising a first challenge applied to the first loop 12, denoted *c*, and a second challenge applied to the second loop 14, denoted *c'*.

The secret key generator 3 is configured to generate the secret key, comprising a set of bits, each bit of the secret key corresponding to an applied challenge and corresponding to the sign of the difference value provided by the subtractor 14 in response to the applied enrolled challenge, if the difference meets a reliability condition related to a reliability threshold. The applied enrolled challenge (for example *i - th* challenge) yields a response that corresponds to one of the bit of the secret key (*i - th* bit). The obtained sign of the difference is then converted into a Boolean value (for example 1 if *diff* is positive and 0 if diff is negative) which forms the bit (*i - th* bit) of the secret key.

The DL-PUF 1 according to the embodiments of the disclosure inherits the reliability of the rebuilding process by a predetermined budgeted time to rebuild each response bit. The time window, representing the duration allowed to make a decision, may be accordingly refined, for example based on measures on the DL-PUF (1) chip (final product). The time window may represent more specifically the time to get a response, represented for each loop 12 or 14 by the corresponding loop output (#loop(c) for the first loop 12 and #loop(c') for the second loop 14), between the application of the input challenge and to obtain the count from the corresponding loop output (#loop(c) for the first loop 12 or #loop(c') for the second loop 14).

The DL-PUF 1 may behave differently in every chip (final product). Indeed, the PUF function is designed to differ from chip to chip (it implements on purpose a race condition). Even in cases where a PUF on a given chip has hard time to generate reliable responses for most of the challenges, the PUF on this very chip can be made reliable by letting the FROs oscillate longer. The DL-PUF 1 may be configured to let each of the FRO oscillate a different duration, depending on the very challenge it is configured with. This allows discriminating safely (i.e. reliably) enough between *c* and *c'* (that is |*loop*(*c*) - loop(c')| is larger than a threshold).

The DL-PUF 1 therefore comprises 2 FROs, each being formed by each loop 12 and 14.

Advantageously, the delay elements of each loop 12 or 14 making up a FRO may be chosen configurable by setting a challenge which selects one delay amongst different possible ones, such that the frequency can depend on the challenge.

The two loops 12 and 14 may be identical structurally and functionally. In particular, they may comprise the same components arranged in an identical manner.

The DL-PUF 1 may be configured to receive an 'enable' signal to control reset of the loops 12 and 14 or oscillations of the loop 12 and 14, depending on the value of the enable signal.

Each loop 12 or 14 may comprise *n* delay elements, arranged in series, with *n* being is a positive, non-zero integer. It should be noted that the case *n* = 1 corresponds to a case where the tradeoff between time to generate the key and the needed area is set to extreme. For example, to generate a 256-bit key, 512 pairs of oscillators may be used, each able to generate *n* = 1 bit of response. In this case, the number of pairs of oscillators (512) is twice the number of needed bits (256), to allow pruning some challenges during enrollment stage.

The delay elements of each loop 12 and 14 are controlled by the code words of a challenge applied to the loop 12 and 14.

The application of the code words of the challenge *c* (respectively *c'*) applied to the delay elements of each loop 12 (respectively 14) may generate a non-null difference of propagation lags in the delay elements that modifies the path followed by the signal sent in the delay elements 120 (respectively 140) which is used in relation with the same phenomenon occurring in the other loop 14 (respectively 12) to generate the DL-PUF response.

The subtractor 16, arranged at the outputs '#loop(c)' and '#loop(c')' of the two loops 12 and 14, is configured to receive the output '#loop(c)' of the first loop 12 and the output '#loop(c')', of the second loop 14, and compute on-the-fly the difference ('diff') between the outputs of the two control loops 12 and 14.

The DL-PUF 1 may also include a decision making unit 18 configured to generate the DL-PUF response based on the received difference *"diff"*. The decision making unit 18 may be further configured to trigger an action in response to the received difference *"diff"* such as for example an alarm triggering action.

During the enrolment phase, a set of enrolled challenges may be determined by evaluating at least one set of candidate challenges, each candidate challenge being a twofold challenge comprising a pair of challenges (first challenge c and second challenge c'), the evaluation comprising applying one or more candidate challenges to the DL-PUF circuit (1), which provides a difference value, for each applied candidate challenge, at the output of the subtractor 16, a candidate challenge being selected as an enrolled challenge if the difference meets a first reliability condition.

In some embodiments, during the enrollment phase, the DL-PUF 1 is configured to iteratively evaluate one or more sets of candidate challenges during one or more iterations, an iteration corresponding to a current set of candidate challenges, a set of candidate challenges being determined from at least one starting set of challenges. If no candidate challenge of a current set of candidate challenges is selected as an enrolled challenge in response to the evaluation of a current set of candidate challenges, the current set of candidate challenges may be updated from the at least one starting set of challenges, either independently for the two challenges of a candidate challenge or dependently.

During the key rebuilding phase (or 'key generation phase'), the secret key generator 3 is configured to generate a secret key, comprising a set of bits, in response to the application of one or more enrolled challenges to the PUF circuit, each bit of the secret key corresponding to an applied enrolled challenge and corresponding to the sign of the difference value provided by the subtractor 16 in response to the applied enrolled challenge, if the difference meets a second reliability condition.

The DL-PUF 1 may further comprise a characterizing unit 19 configured to determine, in the characterizing phase, at least one characterization parameter related to the the DL-PUF 1 from output values collected at the output of one of the two loops 12 or 14 of the DL-PUF 1, in response to the application of challenges among the challenges of the set of training challenges determined during the enrollment phase. The determined characterizing parameter may be used for the characterization phase and/or enrollment phase. In some aspects, the characterization parameter may characterize the Signal-To-Noise Ratio (SNR). A characterization parameter may be delivered in the form of a characterization signal.

In some embodiments, the characterizing unit 19 may be used to determine a reliability threshold (to be used to determine whether the response bit produced by the DL-PUF 1 is reliable enough for the enrollment and rebuilding phases), using the collected loop output values. The characterization may be performed on either of the two loops 12 or 14. Advantageously, only one loop may be used to determine the characterizing parameter (for example SNR), as the reliability is same across the chip. The characterization may be valid for a class of devices.

The characterizing signal provided by the characterization unit 19 may be used to monitor the DL-PUF1.

The characterizing unit 19 may use the output of a single loop 12 or 14 operated until a reliable measure is obtained, based on a condition related to the SNR value (SNR is the acronym of Signal to Noise Ratio). The characterizing unit 19 may be configured to determine a reliability threshold used in the enrollment phase (reliability signal $T$) and/or in the key rebuilding phase ($T'$), using the SNR.

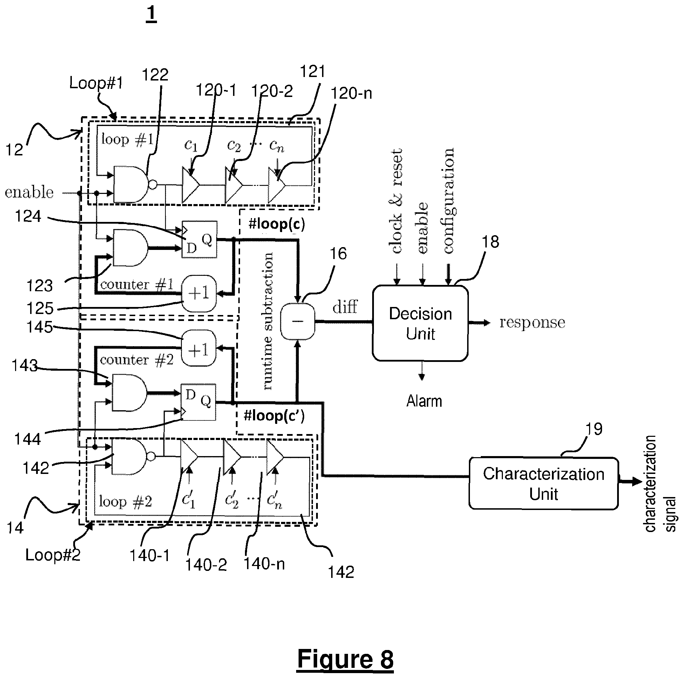

Figure 8 depicts a hardware implementation of the DL-PUF 1, according to some embodiments.

In figure 8, the wires connecting elements of the DL-PUF 1 that are represented with large lines are carrying "buses", i.e. multi-bit signals, while the wires connecting elements of the DL-PUF 1 are represented with thin lines only carry bits.

Each loop 12 or 14 may comprise $n$ delay elements 120-1, 120-2, ..., 120-$n$ (generally referred to using the reference 120) for loop 12, and 140-1, 140-2, 140-$n$ (generally referred to using the reference 140) for the second loop 14. The delay elements 120 or 140 are arranged so that each loop 12 or 14 forms a Free-Running Oscillator FRO.

Each Free-Running Oscillator (FRO) formed by a loop 12 or 14 of the DL-PUF 1 oscillates between 0 and 1, back and forth. The two FRO formed by a loop 12 or 14 of the DL-PUF 1 may be launched by an "enable" signal, which starts them simultaneously (as depicted in Figures 7 and 8). Two registers (each corresponding to a memory element) may be initialized to zero upon the "enable" signal switching from 0 to 1. These registers (124 and 144 in Figure 8) may be represented by a D-flip-flop or 'DFF', which are edge-triggered flip-flops. Each register (124 and 144 in Figure 8) is configured to store a value which is incremented upon each rising edge (i.e. a change from 0 to 1) in the corresponding FRO that feed each of them through their clock input (which is marked with a triangle in figures 7 or 8). The relative value in each of the DFFs indicates which FRO is running the fastest. Namely, the values stored in the DFFs are the positive integers #loop(c) and respectively #loop(c') for registers 124 and 144 respectively. Whether #loop(c) is greater or smaller than #loop(c') determines the binary value of the response bit (output of block 18 in figure 8).

It should be noted that some time may be allowed before making this decision relative to the response bit. Indeed, to ensure a high enough reliability, the difference between #loop(c) and #loop(c') must be significant, for example larger in absolute value than an integer threshold $T$.

During the key rebuilding phase, the *i-th* delay element 120-i (respectively 140-i) of the first loop 12 (respectively 14) of the DL-PUF 1 may be configured to receive a control bit $c_i$ of the challenge $c$ (respectively $c'_i$). A control bit corresponds to a delay value specific to the DL-PUF 1 circuit.

The components of the challenge $(c_1, c_2, ..., c_n)$, applied to the first loop 12 therefore correspond to the control bits $c_i$ applied to the first loop 12, the *i-th* control bit $c_i$ of the challenge c being applied to the *i-th* delay element 120-i of the first loop 12.

The components of the challenge c' = $(c'_1, c'_2, ..., c'_n)$, applied to the second loop 14, correspond similarly to the control bits $c'_i$ applied to the second loop 14, the *i-th* control bit $c'_i$ of the challenge $c'$ being applied to the *i-th* delay element 140-i of the second loop 14. Each control bit $c_i$ or $c'_i$ is made of one bit. The challenge $c$ and $c'$ are one of the challenges of the training set determined during the enrollment phase.

In some embodiments, the two challenges $c = (c_1, c_2, ..., c_n)$ for the first loop 12 and $c' = (c'_1, c'_2, ..., c'_n)$ for the second loop 14 may be set equal.

In some embodiments, the two challenges $c = (c_1, c_2, ..., c_n)$ for the first loop 12 and $c' = (c'_1, c'_2, ..., c'_n)$ for the second loop 14 may be determined from an Hadamard code, or form an Hadamard code.

The delay elements 120 (respectively 140) of a loop 12 (respectively 14) may be linked to one another in series. The output of the last delay element 120-$n$ (respectively 140-$n$) may be looped to the input of the first delay element 120-1 (respectively 140-1) using a loop line 121 (respectively 141). A NAND gate 122 (respectively 142) may be arranged on the loop line 121 (respectively 141). The NAND gate 122 (respectively 142) comprises two inputs, the first input receiving the output of the last chain 120-$n$ (respectively 140-$n$) and the second input receiving a signal 'enable'. The enable signal is configured to allow the first input of the NAND gate 122, namely the output of the last delay element 120-$n$ (respectively 140-$n$), to pass the output of the NAND gate, when a control signal is high.

In operation, during the usage phase, each loop 12 and 14 of the DL-PUF 1 may be reset when the signal 'enable' is equal to zero (enable=0). Otherwise (if the enable signal is equal to 1, i.e. enable=1), each loop 12 and 14 starts oscillating.

Each loop 12 or 14 may comprise a NAND gate 122 (respectively 142) which is configured to control the reset of the loop 12 (respectively 14) followed by the $n$ consecutive delay elements 120-1 to 120-$n$ (respectively 140-1 to 140-$n$) of the loop 12 (respectively 14) forming controlled delay elements.

In some embodiments, the delay elements 120-1 to 120-$n$ (respectively 140-1 to 140-$n$) of each loop 12 (respectively 14) may be built out of standard cell gates, such as for example an invertor (logical NOT operation on a bit) or a buffer (identity function on a bit) in ASIC technology, or from any suitable material in a reconfigurable fabric (Look-up-Table configured as an investor or a buffer for example), such as an FPGA reconfigurable fabric.

The output of the NAND gate 122 (respectively 142) may be then sent back to the first delay element 120-1 (respectively 140-1) and the next loop executes in the loop circuit 12 (respectively loop circuit 14). This thereby forms a looped assembly forming a Free-Running Oscillator FRO.

The Free-Running Oscillator part of each loop 12 (respectively 14) corresponds to the circular path (also called « combinational loop ») that passes through the NAND gate 122 (respectively 142), the n controlled delay elements 120-1 to 120-n (respectively 140-1 to 140-n), and back to the top (respectively bottom) input of NAND gate 122 (respectively 142). As used herein, the terms "top" and "bottom" are used in reference to the view of figure 8.

It should be noted that, although in general a loop (or equivalently a « circle ») has no beginning nor end, in the examples of the loop 12 or 14, it is considered, by convention, that:

- Each loop 12 (respectively 14) « starts » at the NAND gate 122 (respectively 142), as it is where the loop can be prevented from oscillating : the NAND gate 122 (respectively 142) outputs consistently « 1 » when its second input connected to the enable (i.e. its bottom input for the NAND gate 122 or its top input for NAND gate 142) is equal to 0 (i.e., enable=0).

- Each loop 12 (respectively 14) « stops » at the output of the NAND gate 122 (respectively 142), where it can be read it (in a Data Flip Flop 124 for loop 12 and in a Data Flip Flop144 in the loop 14).

The delay elements 120 (respectively 140) are interconnected by interconnection elements.

Each loop 12 (respectively 14) further comprises a counter 125 (respectively 145) configured to count the number of loops executed by the loop 12 (respectively 14) corresponding to the number of times the loop 12 (respectively 14) executes. In figure 8, the counter 125 (respectively 145) of each loop 12 (respectively 14) is connected early in the loop 12 (respectively 14). However, in some embodiments, the counter 125 (respectively 145) of each loop 12 (respectively 14) may be connected anywhere else in the loop, while the DL-PUF 1 remains equally functional.

Each loop 12 (respectively 14) may also comprise an AND gate 123 (respectively 143) configured to receive, as inputs, the enable signal of the DL-PUF 1 (same enable signal as the one input to the NAND gate 122, respectively 142) and the output of the counter 125 (respectively 145), and deliver as output the result of the AND operation between the enable signal and the counter output. This AND gate 123 (respectively 143) allows to reset the loop counter (i.e., set it to the value 0) when enable=0. Alternatively, when enable=1, the AND gate simply let the signal pass, thereby allowing for the incrimination. The AND gate 123 (respectively 143) forms an initialisation element that may receive one bit at one of its input (from the NAND Gate 122 or 142 respectively), and one « bus » at its other input (from the counter 123 or 143 respectively). This bus is the binary representation of the counter (0, 1, 2, 3, ...). For example, this binary representation can be $0 \Leftrightarrow (0000)_2$, $1 \Leftrightarrow (0001)_2$, $2 \Leftrightarrow (0010)_2$, $3 \Leftrightarrow (0011)_2$, etc. The role of the « AND » gate 123 (respectively 143) is to set to zero all the bits of this binary representation (i.e. reset the value to zero).

Each loop 12 (respectively 14) may also comprise a Data Flip Flop (DFF) 124 (respectively 144 for loop 14). The output of the NAND gate 122 (respectively 144) of the loop 12 (respectively 14) is transmitted to the DFF 124 (respectively 144) comprising an input D, and a clock signal input and an output Q.

The DFF always memorizes its value, except it samples (i.e. memorizes) its input when the clock has a rising edge.

The DFF 124 (respectively 144) is configured to deliver an output Q equal to D when the control signal input (output of component 122 or 144 respectively) to the DFF 124 (respectively 144) is high (i.e. equal to 1). The DFF holds its output when the clock signal input to the DFF 124 has no rising edge. Therefore, Q=D when the control signal at the input of the DFF 124 does not transition from 0 to 1.

The subtractor 16 is configured to subtract 'on the fly' (i.e. at any value change) the counter 125 of the first loop 12 and the counter 145 of the second loop 14. This results in a "signed" number, i.e., that can be positive or negative (or null if the two values to be subtracted are equal).

In some aspects, the subtractor 16 may be configured to compute on the fly the difference between two positive integers, corresponding to the first loop output #loop(c), value that may be stored in the first register 124, and to the second loop output #loop(c'), value that may be stored in the second register 144.

The determination of the difference *diff* 'on the fly' means that the difference *diff* is computed in a combinatorial manner, that is re-evaluated each time either the first register 124 or second register 144 changes. It should be noted that the two registers 124 and 144 can change value asynchronously, since the FROs corresponding to the two loops 12 and 14 oscillate each at

its own pace (i.e. at its own frequency). Therefore, over time, the value of difference *diff* can be represented by a trajectory being a Brownian movement, that changes each time to the previous value by +1 or -1 (i.e., the operation is limited to an incrementation or a decrementation).

The subtractor 16 may be accordingly configured to subtract two positive numbers provided at the outputs of the two loops 12 or 14 (each of these two positive numbers being incremented upon a loop iteration), these positive numbers being the count of rising edges, detected by the clock input of the registers 124/144 (the clock input is represented by a triangle). The "Boolean" NAND gates 122/142 initialize the two loops 12 and 14 so that they start simultaneously afresh, whereas the multibit AND gate 123/143 zeroizes the counting value stored in the registers 124/144 (which can be DFFs).

The first loop 12 is also denoted loop#1 and the second loop 14 is also denoted loop#2.

The subtractor 16 is configured to receive as inputs the number of oscillations #loop(c) in the first loop loop#1, and the number of oscillations #loop(c'), in the second loop loop#2, and to determine the difference value *diff* corresponding to the difference between the two received numbers of oscillation #loop(c) and #loop(c').

In a first case, referred to as "case a", the decision making unit 18 may wait for a time corresponding to the time window w, after measurement of the *diff* value, and then make a decision.

Alternatively, in a second case, referred to as "case b", the decision making unit 18 may make the decision as soon as the absolute value of the difference *diff* measured at the output of the subtractor 16 is strictly larger than the reliability threshold.

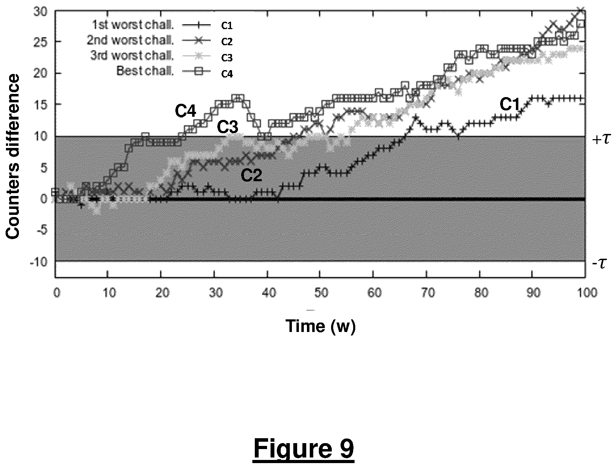

Figure 9 illustrates the dynamic evolution of the difference *diff,* defined as *diff* = #loop(c) - #loop(c'), when the responses are expected to be "1" (namely, the "asymptotic value of #loop(c) - #loop(c') is positive), for four different challenges comprising a first (1st) worst challenge, a second (2nd) worst challenge, a third (3rd) worst challenge, and a best challenge.

Figure 9 illustrates the distribution of the count #loop(c) - #loop(c') used to determine the difference *diff,* for a given « time window » w, which is considered to be the same for all challenges pairs and with own duration for each pair (c, c').

Figure 9 shows 4 trajectories C1, C2, C3 and C4 representing the difference *diff* versus Time, respectively for the 4 considered challenges (1st worst challenge, a 2nd worst challenge, a 3rd worst challenge, and a best challenge).

Figure 9 corresponds to an example of a dynamic count #loop(c) - #loop(c') to determine the difference *diff,* according to the « time window » represented in abscissa. The threshold *T* (with *T* = 10 in the example) is indicated in figure 9 as the line separating the « grey area » corresponding to the area (at the bottom part of the diagram) where the decision is unreliable (i.e. too close to 0) from the « white area » (at the upper part of the diagram) corresponding to the area where a safe decision is made. For the sake of illustration, it is considered that all challenges converge to a positive value. However, in general, for unbiased PUFs, half (50%) of the challenges yield a positive difference and the other half (50%) yield a negative difference.

In some embodiments, the characterizing signal delivered by the characterizing unit 19 may be used for example to generate graphs such as the Brownian motion graphs representing the "Counters Difference" with respect to "Time(*w*)", as represented in figure 9. From this graph, a compromise between resolution/decision time and reliability may be determined. Indeed, the larger the reliability (the value that |#loop(c) - #loop(c')| must exceed), the longer the average time for the measurement to be conclusive, i.e., for either:

-

$$\#loop(c) - \#loop(c') > +\tau,$$

or

-

$$\#loop(c) - \#loop(c') < -\tau,$$

With $\tau$ being either the first reliability threshold $T$ used in the enrollment phase or the second reliability threshold $T'$ used in the key rebuilding phase.

Figure 9 shows that it is possible to determine a time window w such that all challenges will yield a difference of measurements beyond $+\tau$ or below $-\tau$; this value of the time window w can be used as a safe value to let the counters oscillate, resulting in a difference of values *diff* that will be reliable (in that $|diff| > \tau$), in case a). But also it is possible to implement a decision "just in time" (or in "real time") by looking directly at the condition $|diff| > \tau$, in case b).

The decision making unit 18 may receive a set of inputs comprising control and parameter inputs.

In some aspects, several PUF sources instantiated in parallel may be used to speed up the helper data generation and the key rebuilding time. A PUF source refers to one instance of the DL-PUF 1 represented for example in figure 7 or 8.

The control and parameters inputs to the decision making unit 18 may comprise:

- A clock and reset signal from the DL-PUF system level;

- An 'enable' signal received by the DL-PUF 1 from system-level (for example coming from a device or system connected to the DL-PUF 1 or from the user of the DL-PUF 1) and shared with the PUF source(s). The enable signal received by the decision making unit 18 may be configured to synchronize the entropy source (the entropy source is the loop part of a PUF source, i.e. loop 12 or 14) and the "decision making" unit 18

- A configuration input comprising a reliability threshold.

The two loops 12 and 14 may be advantageously copy-and-paste one of each other (identical structurally and functionally), when stimulated with the same challenge. This obviates the need for local placement and routing symmetry within the two loops 12 and 14, unlike the conventional PUFs.

In contrast, in conventional PUFs, an architectural bias corresponding to a defect in the PUF structure may occur. The architectural bias for such PUFs has the consequence to generate responses that are not uniformly distributed when challenges are taken randomly. For example, a conventional SRAM PUF can be more likely to generate more zeros (rather than ones) if the underlying structure (represented in figure 2) is biased. As another example, a conventional Loop PUF can generate more likely a zero (or a one) when one challenge bit is equal to zero (or one).

This architectural bias may occur because if two delays in delay elements are significantly different, the local technological dispersion will not be enough to make one of the delays always longer than the other.

As architectural bias limits the entropy, it is desirable to removed it (i.e., zeroize it).

In order to avoid architectural bias according to the embodiments of the disclosure, the two loops 12 and 14 may be "copy-and-paste" one of each other. Advantageously, in the structure of the DL-PUF 1 according to embodiments of the disclosure, as represented in Figure 7 and 8, the use of two loops 12 and 14 can have a nullified architectural bias with fewer constraints. Indeed, assuming that the two challenges c and c' applied to the two loops 12 and 14 are the same (that is $c' = c$), what matters is not that each and every delay element 120-i and 140-i be balanced in timing (irrespective of the value of the challenge bit $c_i$), but that the overall loop period be the same for the two loops. It is therefore sufficient that the two loops are copy-and-paste instances one of each other. In this case, the DL-PUF 1 therefore only presents a symmetry at the loop level (i.e. at the level of loop#1 and loop#2 corresponding to elements {120-i, 121, and 122} for loop 12 and to elements {140-i, 141, and 142} for loop 14. This relaxation drastically helps the implantation of the loops, thereby making them more amenable to time-to-market constraints.

In some embodiments, the decision making unit 18 may use a Clock-Domain Crossing (CDC) logic through which the result of the subtraction '*diff*' determined by the subtractor 16 may be passed to be sampled without hazards. Clock-Domain Crossing refers to the traversal of a signal in each loop circuit 12 and 14 from one clock domain into another.

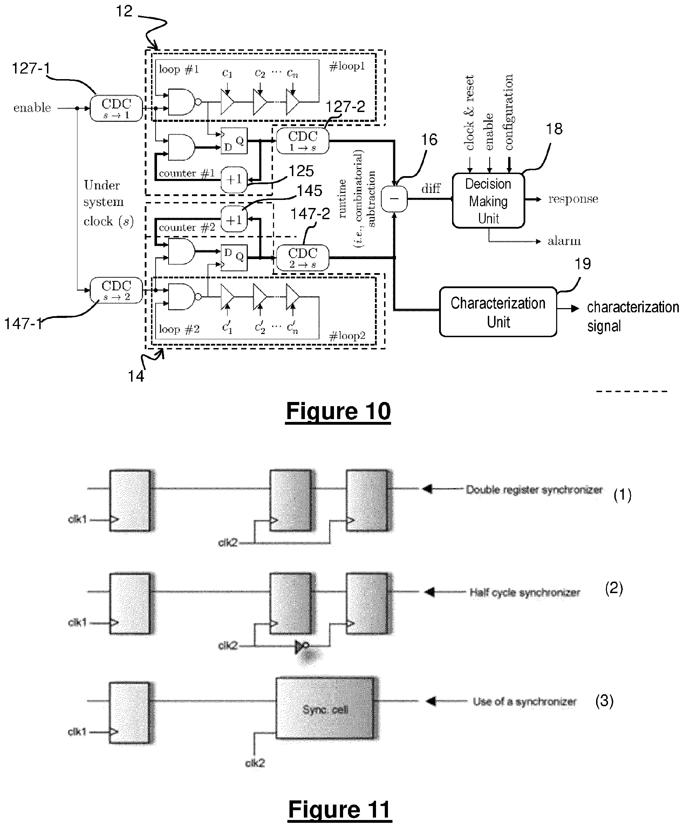

Two other CDC units (127-1 and 127-2 for the first loop 'loop#1' ; 147-1 and 147-2 for the second loop 'loop#2') may be instantiated on the enable signal, for each loop circuit 12 and 14, as illustrated in figure 10. As shown in figure 10, the clock domains are:

- 's', corresponding to system-level,

- '1' for the first loop 'loop#1', and

- '2' for the second loop 'loop#2'.

Therefore:

- in the CDC unit 127-1, the signal traverses the first loop 'loop#1' from the clock domain 's' to the clock domain "1 ";

- in the CDC unit 127-2, the signal traverses the second loop 'loop#2' from the clock domain "1" to the clock domain 's';

- in the CDC unit 147-1, the signal traverses the second loop 'loop#2' from the clock domain 's' to the clock domain "2";

- in the CDC unit 147-2, the signal traverses the second loop 'loop#2' from the clock domain "2" to the clock domain 's';

The challenges c and c' as well as the decision making unit 18 pertain to the system-level clock domain.

The CDC units (127-1, 127-2, 147-1, 147-2) themselves can be of several types such as for example and without limitation a double register synchronizer as represented in part (1) of the figure 11, a half cycle synchronizer as represented in part (2) of the figure 11, or a synchronizer as represented in part (3) of figure 11, etc.

The decision making unit 18 may be configured to trigger an action from the subtraction result *'diff'* using the received control and parameter inputs. In one embodiment, the action may be an alarm. In such embodiments, the decision making unit 18 may be configured to trigger an alarm if based on the variations on the difference *'diff'* received from the subtractor 16. For example, in one embodiment, the decision making unit 18 may be configured to trigger an alarm if the variations on the difference *'diff'* received from the subtractor 16 are too much abrupt in absolute value.

The decision making unit 18 may generate a response (for example one bit) used to trigger an action. One exemplary action may be simply to collate the generated response (which can be a rebuilt key bit, for instance) with those obtained from other previously applied challenges. The complete rebuilding operation therefore may consist in playing the sequence, i.e. setting one challenge and enabling the PUF source, a number of times large enough for the complete key to be rebuilt. For instance, the different challenges used to generate responses form a code, e.g., a Hadamard code, which allows ensuring the independence of the responses when they are bits. The response can be for example multibit, as described in the section 2 of the article "Testing and reliability enhancement of security primitives: Methodology and experimental validation", by Md Toufiq Hasan Anik, Jean-Luc Danger, Omar Diankha, Mohammad Ebrahimabadi, Christoph Frisch, Sylvain Guilley, Naghmeh Karimi, Michael Pehl, and Sofiane Takarabt, published in the Elsevier Journal of Microelectronics Reliability, 2023, https://doi.org/10.1016/j.microrel.2023.115055/, which introduces the concept of higher-order alphabet (HoA) PUFs that output multiple symbols per challenge.

According to the embodiments of the disclosure, the output multiple symbols per challenge may be the "Most Significant Bits" of the "*diff*" signal.

The output of the decision making unit 18 may further include a reliability target value (not represented), such as the expected Bit Error Rate (BER). The reliability target value may be a byproduct of the difference *'diff'* as there is a monotonic relationship between the difference *'diff'* and the reliability. The largest the absolute value of the difference *'diff'*, the greater the reliability. The reliability target value, such as the BER, can be computed from the difference "*diff*".

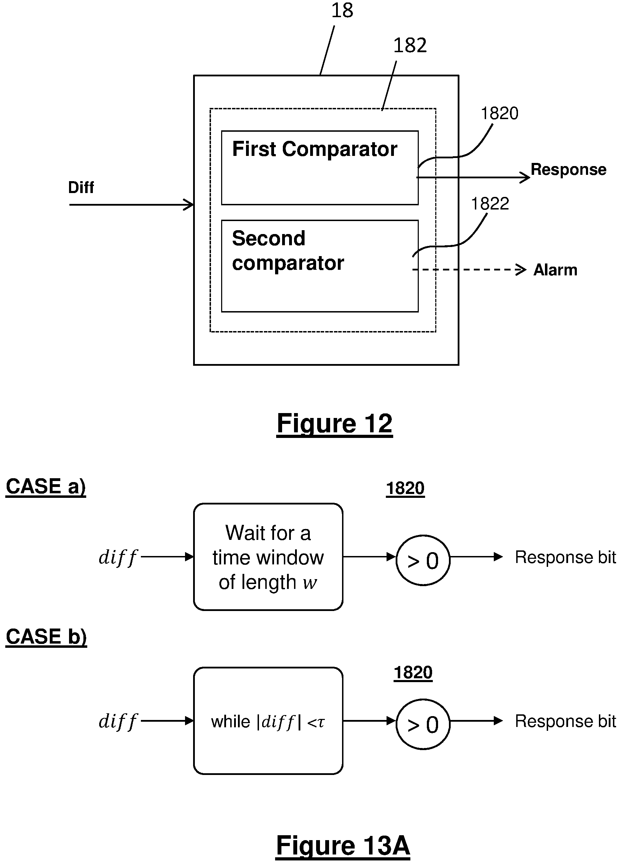

Figure 12 depicts the structure of the decision making unit 18, according to embodiments of the disclosure.

The decision making unit 18 may be configured to determine whether a reliability condition related to the measured difference *diff*.

The decision making unit 18 may leverage controllability, not only after a measurement is performed (case a), but also whilst the measurement is being performed (case b).

In case b, the decision making unit 18 may perform a comparison of the value with respect to a reliability threshold (denoted T in enrollment phase or T' in key rebuild phase) in real time.

In both cases 'Case a' and 'Case b', this requires thoroughly protecting the cryptographic system 5 against side-channel attacks, for the response bit not to leak its value. The decision making unit 18 may comprise a comparison unit 182 configured to assess the reliability condition related to the reliability threshold.

The comparison unit 182 may comprise a first comparator 1820 configured to determine the response bit. In case a, the first comparator 1820 may perform a comparison (also called 'non-real time comparison') of the difference value *'diff'*, after a timeout w (length of the time window), to zero. During the timeout w, the difference value *'diff'* may change. The difference value *diff* obtained after the expiry of the timeout w s used to determine the response bit (from the sign of *diff*) by comparing the obtained difference value *diff* to zero.

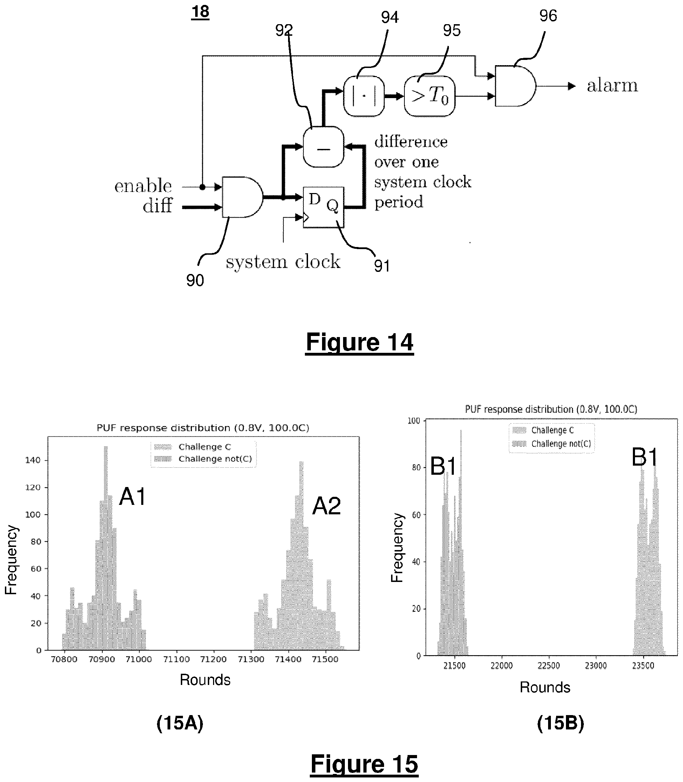

In case b, the first comparator 1820 may perform a comparison (also called 'real-time comparison') of the difference value *'diff'* to a reliability threshold (denoted *T* or *T'*, depending on whether the phase is the enrollment phase or the key rebuilding phase), during runtime (i.e. while the DL-PUF measurement is being performed, that is in real-time), according to case b. The second comparator 1822 is configured to compute the optional alarm output of the decision making unit 18, leveraging a threshold $T_0$ with the structure of figure 14.

By using two loops 'loop#1' and 'loop#2' arranged in parallel (i.e. spatially in parallel) in the DL-PUF 1 according to the embodiments of the disclosure, an attacker cannot perturb one loop independently of the other loop.

In addition to the first reliability threshold T and the second reliability threshold T' (used respectively in the enrollment phase and in the key rebuilding phase), the DL-PUF 1 may additionally use an attack detection threshold $T_0$ (also called 'reference threshold'). While the first reliability threshold T and the second reliability threshold T' are used to ensure the reliability of the DL-PUF 1, the attack detection threshold $T_0$ is used to ensure the security of the DL-PUF 1.

Figure 13A illustrates the reliability condition assessment performed by the first comparator 1820 in case 'case a' ('non-real time comparison) and in case 'case b' (real time comparison), in the enrollment phase or the key rebuilding phase, according to embodiment of the disclosure.

The DL-PUF 1 may wait for a predetermined time window w to decide what bit is to be selected as a response (according to case a), as illustrated by the top diagram (corresponding to "case a") of figure 13A. Alternatively, the DL-PUF 1 may decide for the response bit by waiting for an undetermined amount of time until the absolute value of the difference *'diff'* is larger than $\tau$, $\tau$ denoting the reliability threshold T used in the enrollment phase or the second reliability threshold *T'* used in the key rebuild phase. This is the case of the bottom diagram (b) of figure 13A.

Therefore, the enrollment phase may implement the test of figure 13A (in case a) with the time window of length w or the first reliability threshold *T* (in case b).

Similarly, the key rebuilding phase may implement the test of figure 13A (in case a) with the time window of length w or the second reliability threshold *T'* (in case b).

In case a), waiting for a time period w enables making reliable the sign of the difference.

In case b), it should be noted that waiting for at least w clock cycles ensures that the absolute value |*diff*| of the difference *diff* is strictly larger than the reliability threshold (the first reliability threshold *T* in the enrolment phase and the second reliability threshold *T'* in the rebuilding phase).

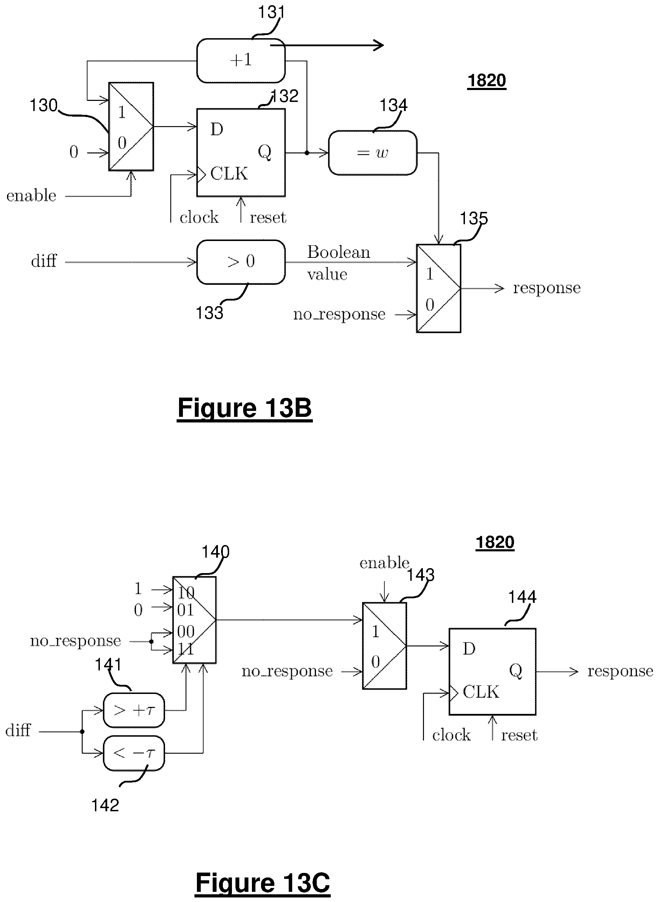

Figure 13B represents an exemplary hardware implementation of the reliability condition in case a, as illustrated in figure 13A, and figure 13C represents an exemplary hardware implementation of the reliability condition in case b, as illustrated in figure 13A. Figure 13B and 13C represents an instanciation of the expected behavior. The value of the difference *diff* changes over the time. A "no_response" means that the circuit is not ready to provide a reliable response.

In figures 13B and 13C, the components 130, 135, 140 and 143 represent multiplexers (the output value of each multiplexer is determined by the selection of one of its inputs, which is itself determined by a bit or a bit pair, according to the received inputs, as indicated inside the multiplexer). Each component 132 and 144 is a D-latch receiving a clock signal, and input D and delivering an output Q equal to D when the clock signal input to the D-latch is high (or equal to 1). The D latch holds its output when the clock signal input to the D-latch is low (or equal to 0). It is configured to introduce a delay. In particular, the delay introduced by the D-latch 132 enable waiting for the time window of length w (component 134). The components 133, 141 and 142 are comparators (respectively comparator to zero for component 133, comparator to +$\tau$ for component 141 and comparator to -$\tau$ for component 142, with $\tau$ being a threshold. In case 'case b', the threshold $\tau$ is either adjusted to *T'* or to *T.*

The attack detection threshold $T_0$ may be used by the DL-PUF 1 for the detection of anomalies in the faults. In the context of decision method, the counters « From loop#1 » and « From loop#2 » are expected to be steady or to be incremented (i.e., change value by 0 or +1 only). Hence, the difference « *diff* » may either stay at its value, or may be updated with an increment, meaning that the value of *'diff'* is replaced by *diff* + 1, (*diff* ← *diff* + 1) or a decrement, meaning that the value of *'diff'* is replaced by *diff* - 1 (*diff* ← *diff* - 1). Therefore, if a change of more than one in absolute value is detected, some error has occurred and an alarm may be triggered by the decision unit 18, as depicted in figure 14.

In figure 14, the first comparator 1820 and the second comparator 1822 are implemented using :

- an AND gate 90 receiving, as inputs, an enable signal and the difference value *'diff'* received from the DL-PUF 1, and delivering as output the result of the AND operation between the enable signal and the *diff* value;

- a D-latch 91 receiving a clock signal, and input D corresponding to the output of the AND gate 90 and delivering an output Q equal to D when the clock signal input to the D-latch 91 is high (or equal to 1). The D latch holds its output when the clock signal input to the D-latch 91 is low (or equal to 0). It is configured to introduce a delay, so that the elementary subtractor 92 can measure a variation of the diff signal;

- an elementary subtractor 92 configured to perform the difference between the output of the AND gate 90 and the Q value output by the D-latch 91, over one clock period;

- an absolute value comparator 95 configured to determine the absolute value of the difference;

- an elementary comparator 96 configured to compare the absolute value of the difference transmitted by the elementary subtractor 92 with the attack threshold $T_0$;

- an additional AND gate 98 receiving, as inputs, the enable signal and the comparison result output by the elementary comparator 96, and delivering as output the result of the AND operation between the enable signal and the comparison value, which provides the output of the comparison unit 182. The output of the comparison unit 182 may be then used to trigger an action, such as an alarm in the case of figure 14.

The value of $T_0$ may be as low as $T_0 = 1$ or strictly superior to 1 ($T_0 > 1$).

The decision unit 18 of figure 14 operates in the system clock domain, which might be slower (in some PVT corners) than the self-timed clocks #1 and #2 generated by FROs. For example, assuming for instance that the system clock is twice as slow, then variations of {-2, -1, 0, +1, +2} are all licit, and $T_0 = 2$ can be safely chosen.

Figure 15 depicts exemplary PUF response distributions of the DL-PUF 1 represented by a first diagram (15A) corresponding to the non-real-time comparison (case a), which is performed after a certain timeout, and a second diagram (15B) corresponding to the real-time comparison (case b), which is performed in real-time. Each diagram (15A) and (15B) represents the evolution of the frequency of the PUF response as a function of the rounds, for a challenge c (curves A1 and B1) applied to the DL-PUF 1 and the challenge 'not c' also denoted ¬c (curves A2 and B2), applied to the DL-PUF 1.

The advantage of the non-real time comparison, in case a, is that the DL-PUF response is obtained in a fixed amount of time. The advantage of the real-time comparison, in case b, is that the reliability can be estimated in real-time. Hence the decision may be delayed until the estimated reliability matches the reliability target. The process according to case b decision mode does not operate in constant time across the challenges, but allows getting a complete PUF value with uniform reliability across the bits making up the PUF value of the DL-PUF 1.

The on-the-fly measurement of the difference '*diff*' between the output of the first loop 12 and the output of the second loop 14 allows efficiently detecting anomalies (whether 'natural' or 'adversarial'), and for example allow catching active side-channel attacks red-handed.

The DL-PUF 1 according to the embodiments of the disclosure accordingly relies on a coupling of two identical Free-Running Oscillators (FRO). It should be noted that while coupling of FROs could be a threat in general, this threat is cancelled with the embodiments of the disclosure. Indeed, while two FROs designed identically face the risk to have their natural oscillation frequency be locked, i.e. feature the same frequency (thereby the difference '*diff*' does not depart from zero, whatever the allowed oscillation time), such coupling can happen with a higher likelihood if loops also feature the same local variability. This is the case for the traditional RO-PUF 34 of figure 5, as amongst the different instances, it can happen that two of them are closer in timing characteristics than others. The DL-PUF 1 according to the embodiments of the disclosure prevents this threat by instantiating only two loops 12 and 14 (as opposed to conventional RO-PUF, where 2n oscillators are needed to generate n bits with in practice, 2n=256 or even 512, for today's cryptographic requirements, where "AES-256" is assumed secure). Further, FRO coupling can be removed at all as a threat by analysing it during the enrollment phase.

For example, in some embodiments, the system 100 may be configured to detect FRO coupling (i.e., oscillation frequency of loop#1 and loop#2 lock together at the very same value, resulting in *diff* = 0 anytime, and thus with no Brownian motion but a steady *diff* = 0, from which obviously no reliable result can be extracted), during the enrollment phase, for each applied challenge. For example, FRO coupling may be detected if it manifests as a longer time than expected in the characterization or the provisioning/enrollment phases. This means that for some challenges, the value of *diff* will be stuck at =0 in the characterization or provisioning/enrollment phases :

- if this occurs in characterization phase (value of *diff* will be stuck at =0 for some challenges), the coupling (i.e. oscillation frequency locking) has high chance of being systemic. In this case, the DL-PUF system may be analysed to determine a source of locking, such as for example some operation that runs in parallel to the DL-PUF 1 and that influences it so much through the power or noise ground it creates that it results in this locking situation. In one embodiment, the "characterization" output from the characterization unit 19 may be used to determine such source of locking. At the system level, two consecutive frequency measurements may be taken, using for example the two challenges c and c' = *not(c)*, and the difference '*diff*' may be computed outside of the PUF source.

- If this occurs during the provisioning/enrollment phase (value of *diff* will be stuck at =0 for some challenges), then it is likely that coupling occurs only for some challenges pairs (c, c'). In this case, such pairs of challenges may be pruned upon helper data selection.

In some embodiments, if FRO coupling is detected for a given applied challenge, this applied challenge is removed and not used subsequently by the DL-LPUF 1. If FRO coupling is detected for too many challenges, the link between the challenges *c* used for one loop (for example 12) and challenges *c'* used for the other loop (for example 14) may be changed, for example by offsetting them using an offset operation. In some embodiments, the second challenge *c'* may be updated as a function of *c*. For example, the offset operation may be the operation

$c = c' + cst$, where *cst* denotes some constant bit vector and "+" represents the bitwise XOR (eXclusive OR), which is the addition in the field {0, 1} of bits.

According to some embodiments of the disclosure, the parameters of the DL-PUF 1 determined during the characterizing phase may include the variance of the characterizing signal delivered by the characterizing unit 19 and/or the variance of the noise.

The variance of the characterization signal (i.e., the variance due to static technological dispersion), denoted $\Sigma^2$, represents the number of oscillations for a set of applied challenges. The variance of the characterization signal quantifies the scattering of the responses when challenges vary. The variance of the characterization signal is also referred to as the oscillation variance across challenges (or inter-class variance).

The variance of the noise (i.e., the variance due to the dynamic and impredictible noise), denoted $\sigma^2$, is also referred to as the average intra-class variance, in that it represents a measure of the variability of the number of oscillations when repeatedly performing the characterization for a given (same) challenge c. This characterization operation may be repeated for different challenges though, and the returned value for $\sigma^2$ is the average of those, across different challenges, so as to polish possible dependency in the challenge choice.

The Signal-to-Noise Ratio SNR of the DL-PUF 1 depends on the time taken to estimate the loop frequency.

After a time *t*, the signal-to-noise ratio (SNR) is defined as the ration between the inter-class variance and the intra-class variance according to formula (1):

$$SNR = t\, \Sigma^2 / \sigma^2 \qquad (1)$$

The time *t* corresponds to a time *t* after the DL-PUF 1 is activated. The SNR is proportional to this time *t* to measure $\Sigma^2$ and $\sigma^2$, and thus also proportional to the time window *w*. The reason is that the dynamic noise averages away when the measurement time increases, whereas the "signal noise" is intrinsic (it is the constructive dispersion that any delay PUF leverages). For example, assuming that the SNR is characterized for a duration of *t*=1 ms, then the SNR for a characterization that would last *t*=2 ms will be doubled.

The static noise is "as is", whereas the dynamic noise can cancel out by averaging.

The signal variance $\Sigma^2$ and the noise variance $\sigma^2$ may be then used in the characterizing phase to determine the value of time window w, which represents the rebuilding time per challenge (in $\mu s$).

The average time needed to generate (or rebuild) the secret key from the DL-PUF 1 is a function of the signal variance $\Sigma^2$, of the noise variance $\sigma^2$ and of *the* amount of pruning (i.e. the

number of challenges which are removed from the training set). The training set of challenges refers to the set of challenges that are used to compute SNR, and to determine the typical value for the time window *w*.

A SNR value directly is directly indicative of the value for the reliability thresholds values on |*diff*| to be used for the enrollment phase (first reliability threshold *T*) and for the key rebuilding phase (second reliability threshold *T'*), and may accordingly be used to determine the reliability thresholds. In the enrollment phase, the threshold *T* indeed determines how many challenges will not be selected. The smaller *T'*, the more challenges are eligible, but also the less reliable they are. At the opposite, the large *T'*, the more challenges are discarded, but the remaining ones have excellent reliability. The same reasoning applies to the key rebuilding phase, with the difference that rebuilding does not result from performing statistics, but a single draw for each key bit.

The DL-PUF 1 may be configured to determine the signal variance $\Sigma^2$ and the noise variance $\sigma^2$ outside of the PUF source from a plurality of "characterization" values output by characterizing unit 19.

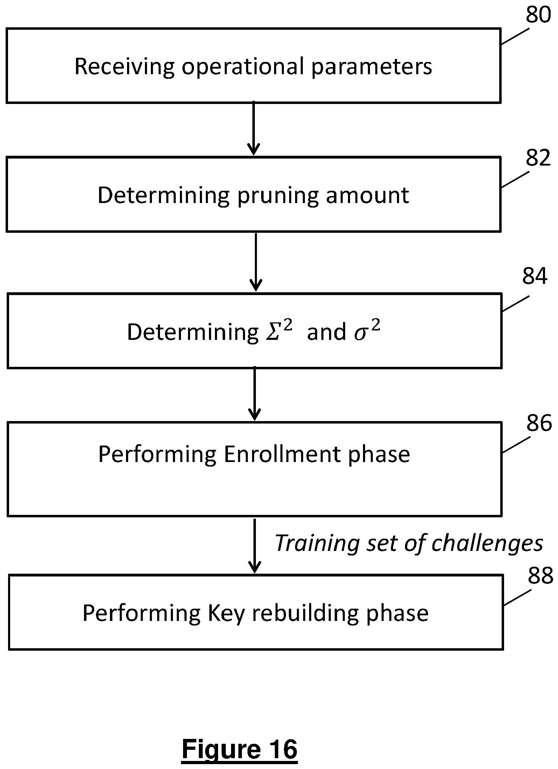

Figure 16 represents the method of generating PUF responses using the DL-PUF 1, according to some embodiments.

In steps 80 to 84, the characterizing phase is implemented to determine a characterizing signal.

In some embodiments, in step 80, operational parameters, including the expected key rebuilding time and the target reliability may be received.

In step 82, the number of challenges to prune (also referred to as the 'pruning number' or 'pruning amount') in the enrolling phase may be determined.

In step 84, the pruning number may be used to determine the values of the signal variance $\Sigma^2$ and of the noise variance $\sigma^2$.

In step 86, the enrollment phase consisting in enrolling each and every cryptographic device 5 forming a chip may be performed.

In step 88, the key rebuilding phase may be performed to determine a secret key by applying the challenges learnt in the enrollment phase (set of training challenges).

The determination of the pruning amount $r$ (number of challenges to prune) in step 82 may be based on a target reliability and on an expected rebuild time. In some embodiments, the reliability and expected rebuild time may be correlated, vis-à-vis pruning, during the enrollment time. Indeed, the more pruning, the better the reliability, and the shorter the rebuilding time.

The reliability is defined at the probability of not rebuilding the correct key, as defined for

example in section 6.2 of the article « Highly Reliable PUFs for Embedded Systems, Protected Against Tampering » by Sylvain Guilley, Jean-Luc Danger, Micheal Pehl, Sophiane Senni, Youssef Souissi, presented at INISCOM 2021, the 7th EAI International Conference on Industrial Networks and Intelligent Systems. April 22-23, 2021, Hanoi, Vietnam.

The amount of pruning $r$ (also called 'pruning ratio') forms a "lever". When $r$ decreases, the entropy also decreases (fewer challenges are retained) allowing to increase the reliability (the fewer challenges kept are more reliable), and incidentally decrease the rebuild time.

The pruning ratio $r$ is defined as the proportion of challenges from an admissible set of challenges $C_0$ (initial set of challenges).

The pruning ratio $r$ may be used to:

- increase the entropy (the larger the value of $r$, the more challenges are kept);

- increase the reliability (the smaller the value of $r$, the more reliable the remaining challenges); and /or

- decrease the rebuild time, as fewer challenges mean faster key bit collection.

Step 86 of performing the enrollment phase may comprise enrolling each and every chip (circuit implementing the DL-PUF 1), based on its intrinsic variability. The link between a challenge and the corresponding response is "intrinsic" (i.e. specific) to the chip, because it "amplifies" local technological dispersion. For delay-based PUFs, the dispersion can come from:

- The density of dopants in the depletion area;

- The thickness of the insulator below the gate; and/or

- The line edge roughness.

This dispersion results in unique delay characteristics, which, when used to create a timing race, allows to determine unique "statically random" numbers. The term "statically random" refers to repeatibly/reproducibly generable value that is unpredictable from the location of the PUF entropy source.

In the enrollment phase 86, a set of challenges is tested for each instance of the chip (by the Helper Data Generator 2), and a number of challenges at least equal to the pruning amount is retained, which provides the training set of challenges. In this phase, unreliable challenges, due to lack of local technology dispersion or rings coupling phenomenon showing up, may be discarded. The set of challenges may be determined from at least one initial set of challenges. Each challenge of the initial set of challenges may be applied to the DL-PUF 1, which provides the difference value « *diff* » for each of the applied challenges. Among the challenges of the initial set of challenge, only the proportion r of challenges that corresponds to the largest values of |diff| (absolute value of difference *'diff'* in measurements from loop#1 and loop#2) may be kept.

Step 88 comprises applying the selected challenges (retained during the enrollment phase), upon each rebuild time (i.e. during key rebuilding phase), to obtain the responses corresponding to each learnt challenge, such responses constituting the "PUF value" of the DL-PUF 1 (this PUF value corresponds to the number of oscillations in the loop, as measured in output "characterization" unit 19). Step 88 may comprise replaying the rebuilding of the selected challenges (i.e. learnt challenge) and running them until a sufficient amount of reliability is reached (which is the same for each challenge), i.e. until the obtained reliability meets the reliability condition related to threshold $T$. The obtained responses and the helper data determined during the enrollment phase can be then used to generate a secret key.

Step 84 (enrollment phase) may be performed per device class (the device refers to a DL-PUF 1 device), for example once for all, or refined per process value for instance. Step 86 may be performed per chip, once before use.

Step 88 (key rebuilding phase) may be performed per chip at each key generation (i.e. key rebuilding) during the key rebuilding phase.

It should be noted that in all the phases, it is possible to choose or not a relationship between $c$ and $c'$. For instance, if the loops loop#1 and loop#2 are copy-and-paste one of each other, then to avoid architectural bias, $c$ may be chosen equal to *c'*. However, more generally, *c* and *c'* can be chosen freely, be dependent or independent.

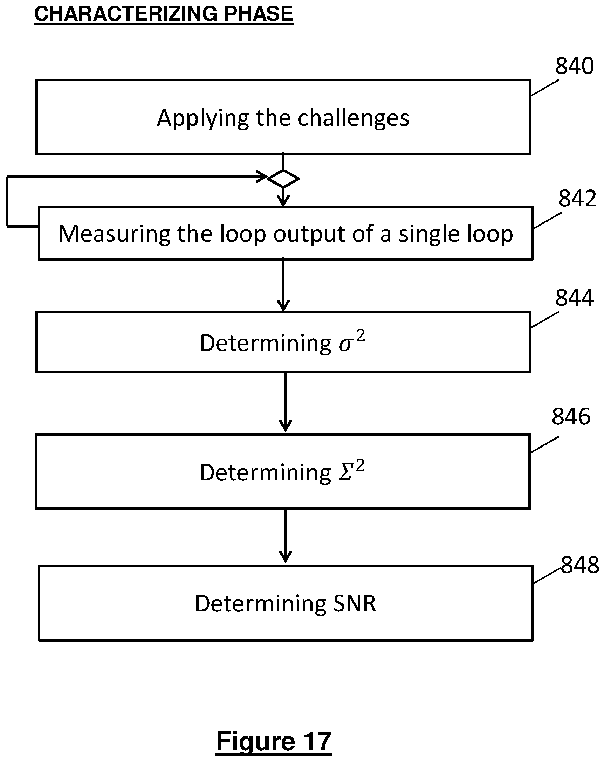

Figure 17 represents the method of characterizing the DL-PUF 1, according to some embodiment. The characterizing method is implemented to determine the values of $\Sigma^2$ and $\sigma^2$ (step 84 of figure 4), according to some embodiments.

The characterization of the DL-PUF 1 may be performed using one direct measurement for one loop 12 or 14, namely the output 'DL-output' of only one loop. For example, in figure 8, only the output '#DL-output2' of the second loop 14 is used for performing characterization of the DL-PUF 1 (alternatively is it possible to use the output of the first loop or both outputs of loops 1 and 2).

In the following description of some embodiments of the disclosure, it will be considered that the characterizing method uses the output #loop(c') of the second loop 14, for illustration purpose only.

In step 840, the characterizing method therefore comprises applying each possible challenges generated during the enrollment phase (challenges belonging to the training set of challenges) and receiving for each applied challenge the output loop(c') of the second loop 14. In step 842, a plurality of measurements, corresponding to the outputs values loop(c') measured in the second loop, may be therefore obtained.

In step 844, the signal variance (inter-class variance) $\Sigma^2$ is determined from the collected output values loop(c') obtained in step 840.

In step 846, the noise variance $\sigma^2$ (intra-class variance) is determined from the collected output values loop(c') obtained in step 840.

The skilled person will readily understand that steps 844 and 846 may be performed alternatively in a reverse order or in parallel.

The noise variance $\sigma^2$ and the signal variance $\Sigma^2$ as obtained may be used for example to determine the SNR, in step 848.

The SNR may be then used to compute the reliability and determine the adequate timing window w.

The characterizing method of figure 17 is implemented before the enrollment phase, that itself precedes the key rebuilding phase.

The default code *C* consists of *n* challenges, where *n* is also the number of controllable elements in the loop (i.e. the number of bits in each challenge).

The number *n* therefore corresponds both to the number of delay elements in the DL-PUF 1 and the number of bits in a challenge.

In the following equations, it is considered that '*#loop(c)*' is the measurement of the loop count, under challenge *c* $\in C$, for repeated attempts $1 \leq i \leq n$, with the number of challenges being denoted $|C|$. The variability over c accounts for the signal variation.

The variability over the *n* repeated measurement (for a given challenge *c*) accounts for the noise variation. For a challenge $c \in \mathcal{C}$, the class means is given by equation 2 below:

$$\mu_c = \frac{1}{n}\sum_{i=1}^{n} \#loop(c)_i \qquad (2)$$

The class variance is given by:

$$\sigma_c^2 = \frac{1}{n}\sum_{i=1}^{n} \#loop\,(c)_i^2 - \left(\frac{1}{n}\sum_{i=1}^{n} \#loop\,(c)_i\right)^2 = \frac{1}{n}\sum_{i=1}^{n} (\#loop\,(c)_i - \mu_c)^2 \;(3)$$

The noise variance (intra-class variance) is then defined as :

$$\sigma^2 = \frac{1}{|C|}\sum_{c\in C}\sigma_c^2 \;\;(4)$$

The signal variance is defined according to formula (5):

$$\Sigma^2 = \frac{1}{|C|}\sum_{c\in C}\mu_c^2 - \left(\frac{1}{|C|}\sum_{c\in C}\mu_c\right)^2 \;\;(5)$$

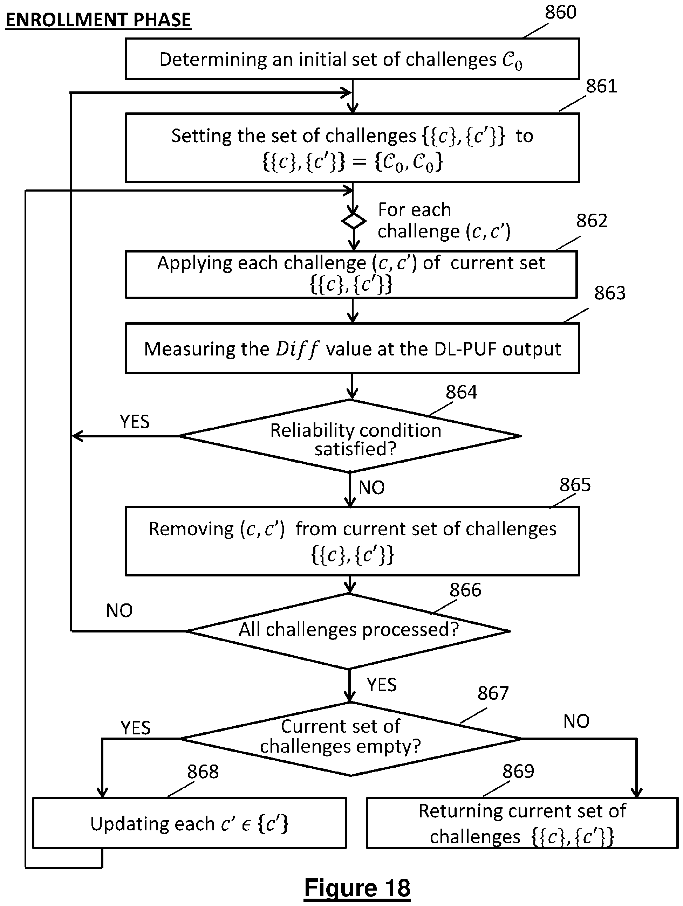

Figure 18 represents the enrollment method implement during the enrollment phase (corresponding to step 86 of figure 1) according to some embodiments.

At the initial step 860, it may be determined whether:

- the challenges *c* and *c'* are independent, or

- c and c' have a deterministic dependence, for example whether c and c' they are related to each other by a formula.

For example, in the case of a deterministic dependence, *c* and *c'* may be defined such that *c' = c XOR u,* with *u* being a constant. For instance, *u* can be equal to zero (then challenges *c* and *c'* are equal) or *u* can be equal to 1111...1, in which case *c' = not(c).*

If the challenges *c* and *c'* are independent, in step 860, a first starting set of challenges $C_0$ comprising $N_0$ challenges may be determined and a second starting set of challenges $C_1$ comprising $N_1$ challenges may be determined, the first set of challenges {*c*} being initialized from the first starting set of challenges $C_0$ and the second set of challenges {*c'*} being initialized from the second starting set of challenges $C_1$. The challenges of the starting set of challenges $C_0$ and/or $C_1$ may be for example determined from a Hadamard matrix.

If the challenges *c* and *c'* are dependent (i.e. have a deterministic dependence), the first set of challenges {*c*} and the second set of challenges {*c'*} may be initialized from a unique starting set of challenges $C_0$ comprising $N_0$ challenges, and in step 860, the starting set of challenges $C_0$ comprising $N_0$ challenges may determined. The challenges of the unique starting set of challenges $C_0$ may be determined for example from a Hadamard matrix.

The following description of some embodiments of the disclosure will be made with reference with challenges *c* and *c'* being dependent and determined from a starting set of challenges $C_0$, for illustration purpose.

In step 861, the set of challenges {{*c*}, {*c'*}} to be applied to the DL-PUF 1, with {*c*} corresponding to the set of challenges to be applied to first loop 12 and {*c'*} correspond to the challenges to be applied to the second loop 14 is defined such that {*c*} = $C_0$ and {*c'*} = C (a same challenge corresponding to a challenge of the starting set of challenges is therefore to be applied to loop 12 and loop 14 in the first iteration of the method of figure 18).

In step 862, each challenge of the set of candidate challenges {{*c*}, {*c'*}}, each candidate challenge consisting of a pair (*c, c'*), is applied to the DL-PUF 1, the challenge *c* ∈ {*c*} being applied to the first loop 12 and the challenge *c'* ∈ {*c'*} being applied to the second loop 14 (block 863).

In step 863, the DL-PUF *"diff"* is measured in response to the applied challenge (*c, c'*), at the output of the DL-PUF 1. The *diff* value may be stored in association with the challenge.

In step 864, it is determined if a reliability condition (first reliability condition) is satisfied, for the challenge pair (*c, c'*), based on the response value *"diff"* measured at the output of the DL-PUF.

The reliability condition may be related to a DL-PUF reliability metrics. For example, in some embodiments, the reliability metrics may be expressed by the bit error rate, the bit error representing the difference between the expected response of the DL-PUF 1 and the output response. In such embodiments, step 864 may comprise determining the time to get an absolute reliability difference (|*diff*|) larger than the reliability threshold *T*. The time to get a value of |*diff*| that is large enough is the determination of the time window *w*. The value of the time window w relates to have a large enough SNR (the SNR increases with the measurement time).

In step 865, if the current challenge (*c, c'*) does not meet the reliability condition evaluated in step 864, the challenge (*c, c'*) may be removed from the current set of challenges {{*c*}, {*c'*}}.

When all the challenges have been processed (blocks 866), the current set of challenges {{*c*}, {*c'*}} may have varied due to the pruning step 865 (it may comprise a fewer number *N'* of pairs of challenges (*c, c'*) than the initial number of challenges $N_0$ in the starting set of challenges $C_0$). It is then determined, in step 867, if the current set of challenges {{*c*}, {*c'*}} is empty (i.e. all pairs of challenges were eliminated from the current set of challenges {{*c*}, {*c'*}}, in step 864).

If it is determined that the current set of challenges {{*c*}, {*c'*}} is not empty in step 867, the training set of challenge that will be used for the key rebuilding phase is set to the current set of challenges {{*c*}, {*c'*}}, with {*c*} being the set of challenges to be applied to the first loop 12 and {*c'*} being the set of challenges to be applied to the second loop 14. The training set of challenges {{*c*}, {*c'*}} may be stored in memory.

Otherwise, if the starting set of challenges is empty (as a result of the pruning step 864) this means that too much coupling exists, and the relation between the challenges {*c*} for loop 12 and challenges {*c'*} for the loop 14 may be updated in step 868, by applying different challenges c and *c'* respectively to the first loop 12 and the second loop 14. In some embodiments, such update may be performed so that the set of challenge *c* associated with the first loop 12 corresponding to the starting set of challenges are the same and the set of challenges *c'* associated with the second loop 14 are updated as a function of the challenges *c* of the starting set of challenge, for example by applying an offset operation. The sequence of iterations corresponding to steps 862 to 867 (block 867) may be then reiterated with a current set of challenges comprising the same set of challenges {*c*} to be applied to loop 12 and the updated set of challenges {*c'*} to be applied to the second loop 14, as updated in step 868.

In step 868, the offsetting operation may consist for example in updating *c'* such that:

$$c' = c + cst \ (6)$$

In equation (6), *cst* is a non-zero constant.

If the current set of challenges is not empty, in step 869, the current set of challenges $\{\{c\}, \{c'\}\}$ may be returned. Step 869 coincides with the determination of the helper data, the helper data being the list of remaining challenges (those for which $diff \geq T$).

The sequence of steps 862 to 867 may be iterated as long as there remains coupling.

It should be noted that the relationship used to update the current set of challenges in step 868 is not limited to equation (6). In some embodiments, the challenges $c$ and $c'$ may be updated according to another relationship or may be updated independently (i.e. drawn from two different and uncorrelated sets). In case the challenge $c$ for loop#1 and the challenge $c'$ for loop#2 are independent, in step 861, the challenge $c$ may be selected from a first initial set of challenges $C_0$ and the challenge $c'$ may be selected from a second initial set of challenges $C_1$.

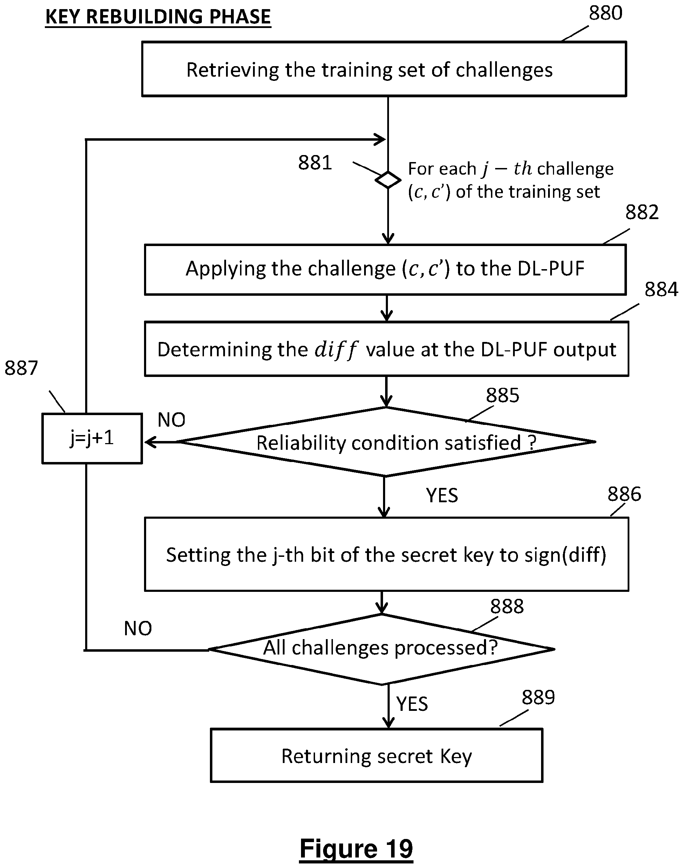

Figure 19 represents the key rebuilding phase (corresponding to step 88 of figure 16) according to some embodiments.

In step 880, the training set of challenges determined during the enrollment phase is retrieved (for example from a memory).

The following steps are performed for each challenge (block 881) of the training set of challenges, i.e. for the $j$-$th$ current challenge with $j$ being initialized to 1, until all challenges have been processed (block 887), i.e. until $j = N$ if the training set of challenge comprises $N$ challenges.

Each challenge of the training set is a twofold challenge comprises a pair of challenges ($c$, $c'$).

In step 882, the current challenge (the $j$-$th$ challenge) of the training set of challenges is applied to the DL-PUF 1. This step comprises applying the control bits of the challenge $c$ to the delay elements of the first loop 12 and the control bits of the challenge $c'$ to the delay elements of the second loop 14.

In step 882, the two loops of the DL-PUF 1 are also launched (i.e. activated by the enable signal), which updates the outputs #loop(c) of the first loop 12 and the output #loop(c') of the second loop 14. The outputs #loop(c) of the first loop 12 and the output #loop(c') of the second loop 14 may be both initialized to 0.

In step 884, the difference *diff* between the outputs #loop(c) of the first loop 12 and the output #loop(c') is determined. This determination may be performed after a time interval w (case a) or as soon as the condition of step 885 is met.

In step 885, it is determined if a second reliability condition is satisfied from the difference value *diff*. In some embodiment, step 885 may comprise determining if the absolute value of the difference value *diff* is strictly higher than a further reliability threshold $T'$ (also called second reliability threshold), i.e. if $|diff| > T'$ (absolute value of the *diff* strictly superior to $T'$). Step 885 therefore consists in evaluating the reliability condition related to the threshold $T'$ is satisfied.

The threshold $T$ used in the enrollment phase (also called first reliability threshold), in step 864 of figure 18, and the reliability threshold $T'$ (also called 'further reliability threshold' or "second reliability threshold") used in step 885 of the rebuilding phase of figure 19 may be of same nature. In some embodiments, the two thresholds $T$ and $T'$ may the same. In embodiments where the enrollment is performed with a higher confidence, as is generally the case (in particular because there is more time available for the enrollment), the value of the threshold $T$ used in the enrollment phase may be larger than the value of the threshold $T'$ used in the rebuilding phase. The threshold values may be defined (for example software defined) and may be changed anytime.

If the condition of step 885 is satisfied, the $j$-$th$ key bit of the secret key corresponding to the $j$-th challenge is set to sign of the difference value *diff* in step 886.

Otherwise if $|diff| \leq T'$ (step 887), the "on the fly" accumulation of the *diff* value may be retried, for a number of times. In some embodiments, if the condition of step 885 is still not satisfied, after a maximum number of successive retries, an alarm may be raised to notify that the key failed to be rebuilt.

Steps 882 to 887 may be iterated for the next challenge, i.e. the ($j$ + 1) - $th$ challenge, of the training set of challenges until all challenges have been processed (blocks 887 and 888). Step 888 enables exhausting all the challenges from the helper data list.

This enables selecting the number of challenges in the helper data (i.e., the number of challenges from step 869).

In step 889, the secret key, comprising the secret bits determined in step 886 for the different challenges, is returned.

The embodiments of the disclosure ensure positive impact on reliability and security (against manipulation attacks).

The DL-PUF 1 can use Hadamard matrices to generate the training set of challenges and more particularly the starting set of challenges $C_0$, or the starting sets of challenges $C_0$ and/or $C_1$, used to generate the training set of challenges (as illustrated by step 860 of figure 18). Various types of Hadamard matrices may be used.

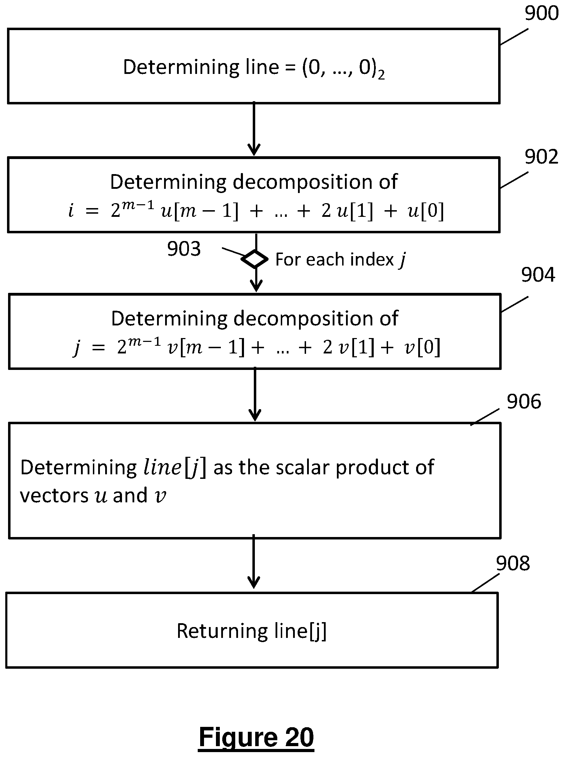

Figure 20 is a flowchart depicting a method for generating each line in a Sylvester-type Hadamard matrix, the Hadamard matrix thus generated being used to generate all challenges of the starting set of challenges $C_0$, according to some embodiments.

The method of figure 20 presents the advantage of not requiring any stored challenges, because they can be computed on-the-fly.

The method enables the generation of each line i in a Sylvester-type Hadamard matrix, with $1 \leq i \leq n$, when $n = 2^m$ is a power of two.

In step 900, a vector of $n$ bits equal to zero is initially generated to determine line = $(0, ..., 0)_2$.

In step 902, considering $u = (u[m-1], ..., u[0])_2$, the binary decomposition of $i$, that is $i = 2^{m-1}u[m-1] + ... + 2u[1] + u[0]$ is performed.

In step 904, for each $j$ index (block 903), with $1 \leq j \leq n$, a decomposition of $j$ is determined. In step 906, $v$ is considered such that $v = (v[m-1], ..., v[0])_2$ corresponds to the binary decomposition of $j$, that is $j = 2^m - 1v[m-1] + ... + 2v[1] + v[0]$.

In step 906, line $j$ (denoted $line[j]$) of Sylvester-type Hadamard matrix is then determined as the scalar product of vectors $u$ and :

$$line[j] \;=\; (u[m-1] \,\&\, v[m-1]) \;\hat{}\; ... \;\hat{}\; (u[0] \,\&\, v[0]) \quad (8)$$

In equation (8):

- "&" denotes the bitwise AND ;
- "^" denotes the bitwise XOR.

In step 908, $line[j]$ is returned.

The Hadamard matrices are symmetrical, thus line $i$ and column $i$ are the same.

The list of challenges corresponds to the lines of the Hadamard matrix, determined according to figure 20.

The enrollment process may rule out some lines in the Hadamard matrix, which becomes rectangular.

The method of figure 20 may be easily implemented using few logical gates. In particular, the number of logical gates used to implement the method of figure 20 may be linear with m = $log2(n)$.

The number $n$ also denotes the number of challenges, because the maximum entropy $H$ which can be obtained from an $n$-element loop PUF is precisely $H = n$ Shannon bit, as demonstrated for example in Theorem 1 of the article « Olivier Rioul, Patrick Solé, Sylvain Guilley, Jean-Luc Danger: On the entropy of Physically Unclonable Functions. ISIT 2016: 2928-2932 ».

The $n$ challenges in question are the $n$ lines for a square $n \times n$ Hadamard matrix.

The DL-PUF 1 according to the embodiments of the disclosure can have a control logic that is deciding truly in runtime, since the two values are gotten at the same time.

Advantageously, in the DL-PUF 1, all the $2^{2n}$ (two to the power $2n$) challenges can be used (all the challenges $c$ and $c'$ applied to the $n$ delay elements of each loop), as opposed to the traditional L-PUF for which only half of the challenges, i.e. $2^{n-1}$ (two to the power $n - 1$)) are available, owing to the necessity to do two measurements to get one bit.

Indeed, the number challenge bits for the DL-PUF 1 is advantageously $2n$ and all challenges ($c$, $c'$) are possible (in contrast, the number of bits of challenge for the conventional L-PUF is just $n$, and only one half of the $2n$ challenges can be used).

Advantageously, the architecture of the DL-PUF 1 is better resistant against attacks. For instance, the frequency measurement attack (as described in Lars Tebelmann, Jean-Luc Danger, and Michael Pehl, "Self-secured PUF: Protecting the loop PUF by masking," in Constructive Side-Channel Analysis and Secure Design, G. M. Bertoni and F. Regazzoni, Eds. Cham, Switzerland: Springer, 2020, pp. 293-314) is made difficult because:

- the two loops 12 and 14 are operated in parallel, so that it is hard to attribute one frequency to one loop 12 and another frequency to the other loop 14;

- the oscillation time is reduced to the bare minimum, meaning that as soon as the computed difference 'diff' between the two loops 12 and 14 is higher than the threshold $T'$ (used in step 885 of the rebuilding phase), the loops 12 and 14 are stopped. This denies for the attacker the opportunity to estimate the oscillation frequency long enough, and it keeps the difference between the two loops frequency to the minimum, thereby reducing the leakage intensity.

The DL-PUF 1 structure can be instantiated multiple times to make a PPA (Performance Power Area) tradeoff between larger area for more performance.

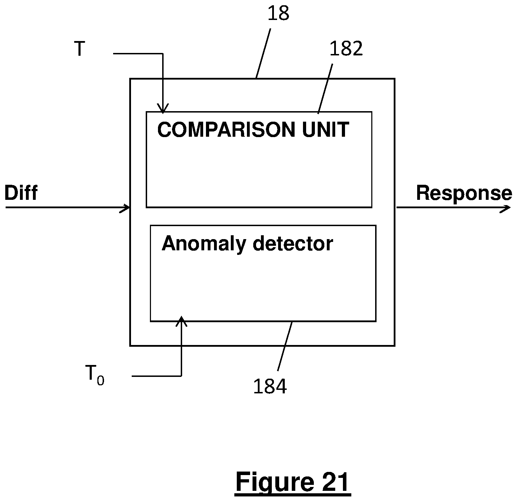

Figure 21 depicts the decision making unit 18 according to embodiments using anomaly detection.

In such embodiments, the decision making unit 18 may further comprise an anomaly detector 184 configured to detect nefarious events, benefiting from the online difference monitoring of the two loops frequency. The anomaly detector 184 may be configured to trigger an alarm depending on the detected event (alarm output represented in figure 8). Such nefarious events may be related to a hazard that could have the method implemented during the key rebuilding phase (key rebuilding), as depicted in figure 3, suddenly decide that the reliability condition, assessed in step 885, is met, which could be detrimental to the expected reliability in terms of BER. Indeed, in some cases, a hazard may cause one loop 12 or 14 to oscillate differently at some point in time owing to some abnormal external factor, which causes with probability ½ an incorrectly rebuilt PUF bit value. Similarly, targeted fault attacks can achieve the same.

The anomaly detector 184 may use a reference threshold $T_0$ and assess a further condition related to threshold $T_0$, referred to as an anomaly condition. The anomaly condition is satisfied is the difference measured in the key rebuilding phase (step 884 of figure 19) is larger than the reference threshold. The reference threshold $T_0$ may be a stepwise threshold equal to the maximum observed/allowed changes from sampling to sampling (i.e., on a clock by clock basis).

In embodiments using anomaly detection, the DL-PUF 100 may be configured :

- to store, after step 863 of figure 18, the measured difference *diff* in a memory if it is higher than the previously stored memory. This enables keeping in the memory the largest stepwise difference which will be used as a reference threshold $T_0$.

- to further determine if the difference *diff* is larger than the reference $T_0$ (in absolute values). If so an error has been encountered during rebuild, and an error notification is reported.

The reference threshold $T_0$ is therefore used to assess an alarm triggering condition (which is satisfied if the difference *diff* is larger than the reference $T_0$) and if the alarm triggering condition is satisfied to generate an alarm, using for example the implementation of figure 14. This enables exploiting information about an inconsistency while computing the « difference signal ». The structure of figure 14 is configured to detect if the variation of « *diff* » over the time is greater than $T_0$ (alarm triggering condition). An alarm can be triggered in any phase of the DL-PUF 1.

In some aspects, the PUF system 100 may comprise multiple interconnected PUF comprising at least two DL-PUFs 1.

For example, in one embodiment, it is possible to further refine the architecture by replacing the system clock by another Free-Running Oscillator. Advantageously, it can be mutualized across different instances of PUFs. The system clock can be a Single Point Of Failure (SPOF), especially if it is manipulated by an attacker. Advantageously, in one embodiment, the DL-PUF 1 may be operated at all without the system clock while using a new clock generation module, which is an FRO.

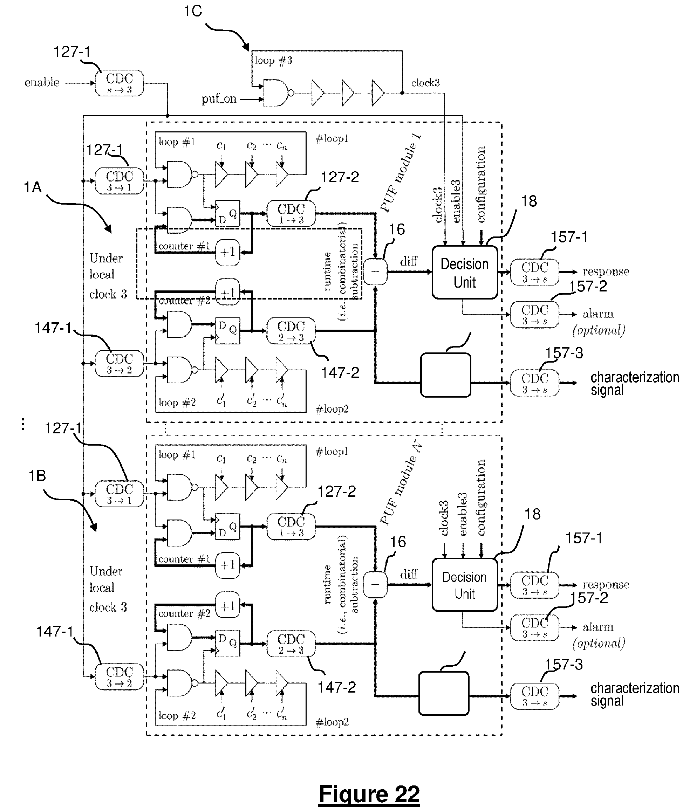

Figure 22 depicts an exemplary architecture using an additional FRO, according to such embodiments. The new clock generation module, which is an FRO, is denoted as « clock 3 » in figure 22. The clock domain crossings are hierarchical : from system '*s*' to the new self-clocked domain '3', and inside the new self-clocked domain '3', it is dispatched to inner independent clock domains '1' and '2'.

In addition to removing the threat for one DL-PUF module, it can scale to do the same for multiple DL-PUF modules, in the case the enrollment and rebuilding processes need to be accelerated by parallelism. Namely, using *N* such PUF modules, a key of length $r * n * N$ bits can be rebuilt (where *r* and *n* are the unitary pruning rate and number of delay elements). This enables managing coupling, which makes even more sense in such context. Using $N > 1$ DL-PUF modules operating concurrently is an advantageous configuration in terms of enrollment and rebuild duration.

For example, in the case of figure 22, two DL-PUF modules 1A and 1B operating concurrently are used.

It should be noted that only one « characterization » of the *N* DL-PUF modules may be used. Further, all the alarms can be merged into one unique alarm with an OR tree, since what matters is whether any of the PUF modules have been experiencing an abnormal difference (*diff*) change, for one cycle of clock 3 to the other.

The signals that are not brought to the interface of the clock domain 3 (such as the "configuration" signal in block 18) are static, meaning that they can be set anytime when the signal enable is equal to zero (*enable* = 0). In some embodiments, an additional signal called " puf_on " signal may be used. The "puf-on" signal is a signal that allows cutting the clock domain of the whole PUF instances at once, thereby placing them all in so-called clock-gating mode. This allows saving energy when the PUF function is not required. Regarding the challenges, each PUF module instance 1A or 1B can have their own challenge pairs (*c, c'*). Each decision making unit 18 may be reset by the enable signal denoted '*enable3*' they receive from the clock domain 3), which is represented in the architecture diagram.

Each decision making unit 18 of a DL-PUF instance 1A or 1B may use at least one Clock-Domain Crossing (CDC) logic upstream the decision making unit 18, through which the result of the corresponding decision making unit 18 may be passed to be sampled without hazards.

In some embodiments the CDC logic upstream the decision making unit 18 of each DL-PUF instance 1A or 1B may comprise:

- a CDC unit 157-1, through which the response signal output by the decision unit 18 during the rebuilding phase traverses from the clock domain '3' to the clock domain '*s*';

- a CDC unit 157-2, through which the alarm signal output by the decision unit 18 traverses from the clock domain (3) to the clock domain 's';

- a CDC unit 157-3, through which the characterization signal output by the characterization unit 19 during the characterizing phase traverses from the clock domain '3' to the clock domain 's'.

The DL-PUF 1 according to the embodiments of the disclosure advantageously allows computing one response bit per individual challenge query.

To better withstand malfunctions caused by noise while preventing attacks, the DL-PUF 1 is based on the two controlled loops 12 and 14.

Indeed, sequential determination of two frequencies may be subject to:

- High-frequency noise, which would selectively disrupt one of the two measurements, thereby causing an issue of reliability;

- Time-accurate attacks, which could adaptively change either or both measurements to forge the result, thereby causing an issue of security.

The DL-PUF 1 can perform real-time decision whether more time is required to get the expected reliability or the current reliability is good enough, for the very response bit in course of rebuilding in the current environmental conditions.

Regarding the reliability, with the DL-PUF 1, the dynamic noise is doubled by the online subtraction (performed by the subtractor 16) of the measurements obtained at the output of the two loops 12 and 14, but the measurement time is twice less as operated only once (in parallel, and not twice in parallel). Thereby, they compensate. Another advantage is that if the rebuilding time is less, then the exposure to low frequency and trend noise is less, which eventually turns out as an advantage for the reliability.

The DL-PUF 1 according to the embodiments of the disclosure also ensures controllability for decision making, and in particular leveraging controllability, not only after a measurement is performed, but also whilst the measurement is being performed by performing a comparison in real time, while thoroughly protecting the system 100 against side-channel attacks.

The DL-PUF 1 according to the embodiments of the disclosure further enables resilience to noise so that the reliability of the PUF is not threatened by the noise, whether noise from the environment (potentially of adversarial origin), or local noise (for reliability concerns).

The DL-PUF 1 according to the embodiments of the disclosure prevents various advantages over the prior art, including its ability to operate differentially in parallel, so that attacks which would be fast enough to change the environmental conditions between two measures do not apply. Another by-product results from response establishment based on mechanism b. If one response is easy to obtain, meaning that |diff| gets quickly high, then the rebuild time can be reduced. Indeed, as the criteria is $|diff| \leq T_0$, there is no need to wait for the worst case scenario (of the least reliable response bit). At the opposite, if one response bit is more challenging to rebuilt, our online computation of $diff$ (still in case b) allows monitoring the reliability and taking the necessary time to get the expected reliability prior to deciding for the response bit. Advantageously, the reliability of all the rebuilt bits will be the same, and at the same time the rebuild time is reduced to its minimum value to ensure the reliability (BER) uniformity over all the response bits.

The entropy of PUFs has been evaluated differently depending on whether the PUF considered in the table is a weak PUF or a strong PUF. It shall be noted that all strong PUFs can be implemented in a portable manner, meaning that they can fit both in Field Programmable Gate Arrays (FPGAs) and in Application Specific ICs (ASICs).

For weak PUFs, not all unitary entropic structures yield reliable bits. Thus the entropy scales as a proportion of the $N$ entropic sources (usually around 10%).

For strong PUFs, an exponential number of challenges can be obtained. However, they consist in comparisons, hence an ordering of the challenges is sufficient to describe its behaviour. The number of orderings is equal to factorial $n$ (denoted as $n!$). Therefore, in base two, their entropy is the logarithm thereof, namely the entropy of strong PUFs is equal to $log2(n!)$. By the Stirling formula, this quantity is equivalent to $n * log2(n)$, when $n$ grows larger and larger. Thus strong PUFs, even though they have a large number of challenges, are not significantly more entropic than weak PUFs. Indeed, $n * log2(n)$ is termed as "quasi-linear" in $n$, as the $log2(n)$ factor grows very slowly compared to $n$, and can thus almost be considered a constant. The merit of strong PUFs is in the way the challenges can be selected and on their controllability.

The advantages of the DL-PUF 1 according to the embodiments of the disclosure include among others:

- In terms of implementation requirements, they ensure a systematic bias (i.e. « architectural bias »), corresponding to the fact that the DL-PUF 1 naturally favors some responses, irrespective of the instance) is the lowest, which maximizes the entropy H of the DL-PUF.

- In terms of enrollment and rebuilding efficiency, they allow timely determining when the response associated to a challenge is reliable enough, which is a very useful feedback that does not exist in other conventional PUF structures. Thanks to the runtime (or « on the fly ») analysis of the evolution of |*diff*|, it is possible to stop the rebuilding of each bit as soon as its reliability is deemed enough (leveraging threshold value $T$). This also allows for an unprecedented flexibility across PVT conditions ("Process, Voltage, Temperature", the extreme values of PVT being the « PVT corners »). Whatever those environmental conditions (including aging and damage by Single Event Upsets (SEU)), the key bits will all be rebuilt with the same BER.

- The entropy is increased, in particular over the conventional L-PUF, as two loops are operated.

- In terms of resistance to attacks, the DL-PUF 1 allows detecting rebuilding abnormalities; this is possible because the difference between the two concurrent FROs is computed on-the-fly, hence enabling do online supervision.

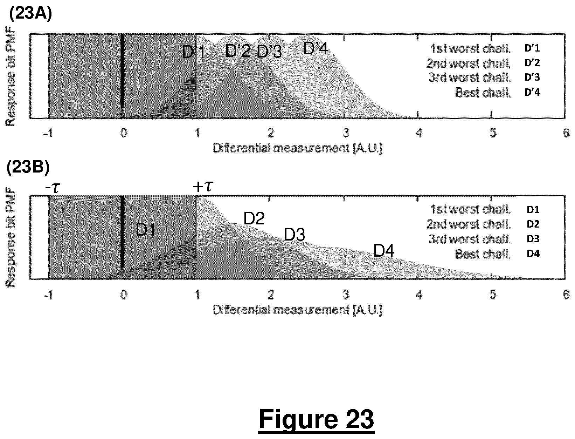

Figure 23 shows comparative diagrams (23A) and (23B) representing the bit response Probability Mass Functions (PMF) (vertical axis) as a function of the differential measurement (horizontal axis), in response to a 1st worst challenge (represented by a curve D'1), a 2nd worst challenge (represented by a curve D'2), a 3rd worst challenge (represented by a curve D'3), and a best challenge (represented by curve D'4).

Figure 23 represents the Probability Mass Functions (PMF) of a simple delay PUF with only $2n = 4$ challenges. Those challenges (abridged by the notation "chall." in the figure) have already been enrolled. The enrollment has been such as the differential measurements are outside of the [-1, +1] interval, in arbitrary units (A.U.). It should be noted that for simplicity of illustration, all differential measurements are assumed positive, although in general, some challenges that pass enrollment could well have average differential measurement that is negative and less than the allowed -1 negative threshold.

The worst challenge refers to the challenge leading to the lesser bias (i.e. |*diff*| value) while the best challenge refers to the better bias.

The worst case challenge determines the reliability. This means that all other challenges can only yield more reliable bits. The reliability, in terms of BER is equal to the area of the PMF being to the right-hand side of the decision threshold (materialized by the vertical line = 0). The area of this single-ended distribution wing is set such that is less or equal to the target reliability. This can be achieved:

- either by letting the FRO loop oscillates longer (i.e., by increasing t in Equation (1)), which has the effect of reducing the width of the worst challenge PMF (by the law of large numbers);

- or by increasing the amount of enrollment, which amounts to enlarging the rejection interval [-1, +1] to a wider interval by discarding more challenges, for a given SNR (i.e., a constant PMF width).

In Figure 23, the PMF of four challenges is represented in each diagram (23A) and (23B).

The diagram (23A) corresponds to the case of a conventional L-PUF, for which a given amount of oscillating time t is allocated per challenge, but is same per challenge. Therefore, all PMFs have same width and consequently, the reliability for the 2nd, 3rd, etc. worst challenges (that can be visualized as the area of the wing < 0) is decreasing, and is thus better than required.

The DL-PUF 1 according to the embodiments of the disclosure enables obtaining at least similar statistics in terms of reliability and rebuild time, in case a) where the response is determined based on a comparison after a timeout (time window w), while enabling using two measures obtained in parallel at the outputs of the loops 12 and 14 (acting as FROs). Further, as the DL-PUF 1 can obtain the difference value '*diff*' on-the-fly (the value of the difference diff car be determined at any time), in case b, it is possible to fastly make a decision as regards the reliability, according to the reliability criteria |*diff*| > $\tau$ with $\tau$ being equal to $T$ or $T'$ depending on the DL-PUF phase (enrollement phase or key rebuilding phase), the difference value *diff* being obtained in real time.

The diagram (23B) corresponds to the case of the DL-PUF 1 according to the embodiments of the disclosure for which a different amount of time t can be allocated per challenge. The time $t=t_1$ denotes the time for the worst challenge to oscillate and that allows to reach the targeted reliability BER. For challenges better than the worst, the oscillation time $t_i$ (i > 1) can be set smaller, resulting in their PMF being $t/t_i$ times wider, without prejudice of the per bit BER. In the area [-1, 0] of diagram (23B), the optimal situation appears to be when all areas are the same.

Figure (23B) shows that a dynamic decision in real time (corresponding to case b) of figure 13A) enables saving time.

From the diagrams (23A) and (23B) of figure 23, it can be noticed that the rebuilding time is $2 \times N \times t$ for the L-PUF, whereas it is $t_1 + t_2 + \cdots + t_N$ for the DL-PUF 1, where we have $t = t_1 \leq t_2 \leq \cdots \leq t_N$.

This shows that given a target reliability, the average time to rebuild the secret key is more than twice less for the DL-PUF 1 than for the conventional L-PUF of the prior art (such as L-PUF 36 in Figure 6). The scale "twice" arises from the fact that DL-PUF 1 executes already two oscillations whilst the conventional L-PUF needs to chain them, one after the other.

Further, for conventional L-PUFs, the key rebuilding time is set such as the worst challenge allows for the key bit rebuilding with target accuracy. Subsequently other challenges (for the other key bits) will use, by default, the same rebuilding time, hence a rebuilding time that is linear with the bitwidth of the PUF value. Obviously, this is not optimal as the rebuilding of other bits will have a better reliability than that rebuilt from the worst challenge. In contrast, for the DL-PUF 1 according to the embodiments of the disclosure, the rebuilding time depends on the bias for each challenge. For the worst challenge, the key rebuilding time is the same as the conventional L-PUF. However, other bits of the PUF value benefit from smaller rebuilding times with the DL-PUF 1. Indeed, the target reliability (depending only on the SNR) induces a smaller t in Equ (1), as the ratio $\Sigma^2/\sigma^2$ is larger. Further, with the DL-PUF 1 according to the embodiments of the disclosure, as the difference is computed « on the fly », it can be decided to stop loop #1 and loop#2 as soon as the condition $|diff| > \tau$ or is satisfied ($\tau$ being the first reliability threshold $T$ or the second reliability threshold T').

In the diagram (23B), the grey area corresponds to the interval $[-\tau, \tau]$. As depicted in the diagram (23B), after a time w, all the values of the difference *diff* will be higher (in absolute value) than the threshold $\tau$ ($\tau$ being the first reliability threshold $T$ or the second reliability threshold T') ; However, as shown in figure 23(B) the key can be rebuilt faster by waiting less than the time w, by instead assessing the reliability condition $|diff| > \tau$ according to case b instead of waiting for w (reliability condition of case a).

The embodiments of the disclosure present additional multiple advantages including among other advantages:

- an extra capacity of noise filtering, in particular noise that occurs simultaneously;

- a capability to compute the difference *diff* between the oscillation speed of the two loops 12 and 14 in real time, allowing for adaptive control. This allows getting the expected reliability timely, which both allows for online reliability checking according to the desired value, while optimizing the rebuilding time for unseen environmental conditions;

- the use of two loops 12 and 14 instantiated in parallel to make frequency measurement harder, which makes sophistication such as self-secured PUF or interleaved challenge L-PUF needless. By limiting the measurements to the minimum required to get the prescribed reliability, this also limits the window of opportunity for attacks, by exposing the working loop as little time as possible. By the same token, the optimized key rebuilding time incurs a smaller exposure to trend noise and hazards;

- The on-the-fly measurement of the difference *diff* between the two loops 12 and 14 allows detecting natural and adversarial anomalies, and therefore catch active side-channel attacks red-handed;

- The absence of restriction to reserve challenge *not*(*c*) when *c* is used. Indeed, the two loops 12 and 14 can be fed with arbitrary challenges. Hence a larger challenge space, which in turn opens opportunities for more entropy, and future-proof usage (e.g., re-enrollment);

- The enrollment time can be improved, as in theory the way to rebuild a key can require fewer selected challenges (compared to L-PUF);

- Physical design is eased in the case the same challenge is applied to both loops 12 and

14. Indeed, the L-PUF requirement to have a balanced switch for each bit of the challenge is waived for the DL-PUF 1, in so far as only the fact the two loops 12 and 14 are the same (copied- and-pasted one from each other) matters.

The DL-PUF 1 may be used in various applications such as in various consumer, commercial, industrial, and infrastructure applications, such as safety-critical systems (industrial systems, automotive systems, satellite systems, etc.) for which an ability to resist attacks is needed.

Although not limited to such cases, the embodiments of the disclosure are particularly suited for chips that do not have Non Volatile Memories (NVM) to store identities or secrets. This is for example the case of so-called 'chiplets' (i.e., bare chips pertaining to a "System in Package" or "SiP"). Indeed, each chip in a chiplets assembly is specialized, and chips capable of embedding NVM are not the most common ones. The reason is that, for a chip to embark NVM, it must be fabricated with more masks (compared to a minimal chip consisting only of logic gates from a standard cell library), and anyhow, NVM is merely not available as a process augmentation in the thiner geometries. Therefore, a SiP might be composed of chips (called chiplets) that have no NVM, but nonetheless, for the sake of ensuring a proper assembly, must feature some unique identity (ID) or secret key. It should be noted that, IDs or secret keys are targets of attacks, including under scenarios where the attacker tampers with the environmental conditions. Hence the adequation of the embodiments of the disclosure as resistant to such attack attempts. This thereby ensures the correct functioning (regarding the integrity of an ID or the confidentiality of a secret key) of a chiplet assembly in adversarial conditions.

Embodiments of the present disclosure can take the form of an embodiment containing software only, hardware only or both hardware and software elements.

Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein. In particular, the methods described herein may be implemented in a computer system.

It should be noted that the functions, acts, and/or operations specified in the flow charts, sequence diagrams, and/or block diagrams may be re-ordered, processed serially, and/or processed concurrently consistent with embodiments of the disclosure. Moreover, any of the flow charts, sequence diagrams, and/or block diagrams may include more or fewer blocks than those illustrated consistent with embodiments of the disclosure.

While embodiments of the disclosure have been illustrated by a description of various examples, and while these embodiments have been described in considerable detail, it is not the intent of the applicant to restrict or in any way limit the scope of the appended claims to such detail. In particular, the invention is not limited to a starting set of challenges $C_0$ generated from Hadamard code or matrices. For example, in alternative embodiments, it is possible to start from a code (for example a non-linear code) with large minimum distance, which is the condition to maintain a high entropy of the rebuilt ID or key.

Additional advantages and modifications will readily appear to those skilled in the art. The disclosure in its broader aspects is therefore not limited to the specific details, representative methods, and illustrative examples shown and described.

## Claims

1. An electronic system for generating a secret key comprising a Physically Unclonable Function (PUF) circuit, wherein the PUF circuit comprises two identical loops (12, 14), arranged in parallel, comprising a first loop and a second loop, each loop comprising a number of delay elements arranged in series, each loop forming a Free-Running Oscillator configured to oscillate between two states,

   wherein the system is configured to apply one or more challenges to the PUF circuit, each challenge forming a twofold challenge comprising a first challenge and a second challenge, the first challenge being applied to the first loop (12) and the second challenge being applied to the second loop (14),
   wherein the PUF circuit (1) comprises a subtractor (16) configured to receive as inputs the number of oscillations in the first loop and in the number of oscillations in the second loop, for each applied challenge, and determine a difference value corresponding to the difference between the received numbers of oscillations,
   wherein the system is configured to determine a set of enrolled challenges, during an enrollment phase, by evaluating at least one set of candidate challenges, said evaluation comprising applying each candidate challenge of said set of candidate challenges to the PUF circuit (1), which provides a difference value, for each applied candidate challenge, at the output of the subtractor (16), a candidate challenge being selected as an enrolled challenge if the difference meets a first reliability condition,
   the system further comprising a secret key generator (3) configured to generate a secret key, comprising a set of bits, during a key generation phase, in response to the application of one or more enrolled challenges to the PUF circuit, each bit of the secret key corresponding to an applied enrolled challenge and corresponding to the sign of the difference value provided by the subtractor (16) in response to said applied enrolled challenge, if the difference meets a second reliability condition.

2. The system (100) of claim 1, wherein a reliability condition is evaluated in real-time, in response to the determination of the difference value, wherein said first reliability condition is satisfied if the absolute value of the difference value is strictly larger than a first reliability threshold and said second reliability condition is satisfied if the absolute value of the difference value is strictly larger than a second reliability threshold.

3. The system of claim 1, wherein a reliability condition is evaluated in non-real time, in response to the expiration of a timeout value after the determination of the difference value.

4. The system of any preceding claim, wherein the system is configured to iteratively evaluate one or more sets of candidate challenges during one or more iterations, an iteration corresponding to a current set of candidate challenges, a set of candidate challenges being determined from a starting set of challenges, and wherein if no candidate challenge of a current set of candidate challenges is selected as an enrolled challenge in response to the evaluation of a current set of candidate challenges, the current set of candidate challenges is updated from the starting set of challenges, such that, for each challenge of the updated set of candidate challenges, the first challenge is set equal to a given challenge of the starting set of challenges and the second challenge is updated as a function of said first challenge, the system being configured to evaluate the updated set of candidate challenges in the next iteration.

5. The system of claim 4, wherein the system is configured to initialize a first set of candidate challenges from a starting set of challenges comprising a first challenge and a second challenge both set equal to a given challenge of the starting set, the first set of candidate challenges being evaluated in the first iteration.

6. The system of any claim 4 and 5, wherein said updating of the second challenge comprises setting the second challenge equal to the first challenge minus a selected constant value.

7. The system of any preceding claim 1 to 6, wherein each set of candidate challenges is determined from a starting set of challenges and a second starting set of challenges, the first challenge and the second challenge of each candidate challenge being independent, the first challenge being determined from the first starting set of challenges and the second challenge being determined from the second starting set of challenges, and wherein if the current set of challenges is empty, in response to the evaluation of a current set of candidate challenge, the current set of challenge is updated from the starting set of challenges and the second challenge is updated from the second starting set of challenges, the system being configured to evaluate the updated set of candidate challenges in the next iteration.

8. The system of any preceding claim 4 to 7, wherein a starting set of challenges is determined from a Hadamard code.

9. The system of any preceding claim, wherein the system comprise a characterizing unit (19) configured to apply the set of enrolled challenges, measure the output of at least one of the two loops for each application of an enrolled challenge, which provides a measure of said loop output for each application of an enrolled challenge, and determine at least one characterizing parameter from said measures of the loop output,

10. The system of any preceding claim, wherein said at least one characterizing parameter comprise at least one of a noise variance and a signal variance.

11. The system of claim 10, wherein the characterizing unit (19) is further configured to determine the signal to noise ratio from the noise variance and the signal variance, according to:

$$SNR = t\, \Sigma^2 / \sigma^2,$$

where t denotes an oscillating time window, $\sigma^2$ denotes the noise variance and $\Sigma^2$ denotes the signal variance.

12. The system of any preceding claim, wherein it further comprises an anomaly detector (184) configured to determine if an anomaly condition related to a reference threshold is satisfied from the difference provided by said subtractor (16).

13. The system of claim 12, wherein the reference threshold corresponds to the largest difference measured at the output of the subtractor (16) during the enrollment phase.

14. A method of generating a secret key using a Physically Unclonable Function (PUF) circuit, wherein the PUF circuit comprises two identical loops (12, 14), arranged in parallel, comprising a first loop and a second loop, each loop comprising a number of delay elements arranged in series, each loop forming a Free-Running Oscillator configured to oscillate between two states,

wherein the method comprises:

i. applying one or more challenges to the PUF circuit, each challenge forming a twofold challenge comprising a first challenge and a second challenge, the first challenge being applied to the first loop (12) and a second challenge being applied to the second loop (14),

ii. for each applied challenge, determining a difference value corresponding to the difference between the number of oscillations in the first loop and the number of oscillations in the second loop,

wherein the method comprises determining a set of enrolled challenges, during an enrollment phase, by evaluating at least one set of candidate challenges, said evaluation comprising performing steps i. and ii. for the one or more candidate challenges, which provides a difference value, for each applied candidate challenge, and selecting a candidate challenge as an enrolled challenge if the difference meets a first reliability condition, the method further comprising generating a secret key, comprising a set of bits, during a key generation phase, said generation of a secret key comprising applying one or more enrolled challenges to the PUF circuit, according to steps i. and ii., each bit of the secret key corresponding to an enrolled challenge applied in step i. and corresponding to the sign of the difference value obtained in step ii for said applied enrolled challenge, if the difference value meets a second reliability condition.

**Figure 1**

**30**

## Figure 2

**32**

320

d $_{4i+2}$

d $_{4i+3}$

b $_i$ = 0

d $_{4i}$

d $_{4i+1}$

b $_i$ = 1

## Figure 3

**Figure 4**

**Figure 5**

**36**

Loop-PUF
(with $n$ inverters)

$\in N$

challenge

## Figure 6

**1**

*c*    12                    16     18

| First Loop | #loop(c) | Subtractor | Diff | Decision making unit | Response |

enable

| Second Loop | #loop(c') | | | Characterizing unit | Characterization signal |

*c'*    14                    19

## Figure 7

**Figure 8**

**Figure 9**

**Figure 10**

**Figure 11**

18

182

First Comparator

1820

Diff

Response

1822

Second
comparator

Alarm

## Figure 12

CASE a)

1820

$diff$ → Wait for a
time window
of length $w$ → $> 0$ → Response bit

CASE b)

1820

$diff$ → while $|diff| < \tau$ → $> 0$ → Response bit

## Figure 13A

**Figure 13B**

**Figure 13C**

**Figure 14**

(15A)

(15B)

**Figure 15**

Receiving operational parameters — 80

Determining pruning amount — 82

Determining $\Sigma^2$ and $\sigma^2$ — 84

Performing Enrollment phase — 86

*Training set of challenges*

Performing Key rebuilding phase — 88

**Figure 16**

## CHARACTERIZING PHASE

840

| Applying the challenges |
|:---:|

842

| Measuring the loop output of a single loop |
|:---:|

844

| Determining $\sigma^2$ |
|:---:|

846

| Determining $\Sigma^2$ |
|:---:|

848

| Determining SNR |
|:---:|

## Figure 17

**ENROLLMENT PHASE**

860

Determining an initial set of challenges $C_0$

861

Setting the set of challenges $\{\{c\},\{c'\}\}$ to
$$\{\{c\},\{c'\}\} = \{C_0, C_0\}$$

For each
challenge $(c, c')$

862

Applying each challenge $(c, c')$ of current set
$$\{\{c\},\{c'\}\}$$

863

Measuring the $Diff$ value at the DL-PUF output

864

Reliability condition
satisfied? — YES

NO

865

Removing $(c, c')$ from current set of challenges
$$\{\{c\},\{c'\}\}$$

866

All challenges processed? — NO

YES

867

Current set of
challenges empty? — YES ... NO

868

Updating each $c' \in \{c'\}$

869

Returning current set of
challenges $\{\{c\},\{c'\}\}$

**Figure 18**

**KEY REBUILDING PHASE** 880

Retrieving the training set of challenges

881 For each $j - th$ challenge $(c, c')$ of the training set

882

Applying the challenge $(c, c')$ to the DL-PUF

884

Determining the $diff$ value at the DL-PUF output

887

885
Reliability condition satisfied ?

NO j=j+1

YES 886

Setting the j-th bit of the secret key to sign(diff)

888
NO All challenges processed?

YES 889

Returning secret Key

**Figure 19**

900

Determining line = $(0, ..., 0)_2$

902

Determining decomposition of
$$i = 2^{m-1} u[m-1] + ... + 2\, u[1] + u[0]$$

903

⬦ For each index $j$

904

Determining decomposition of
$$j = 2^{m-1} v[m-1] + ... + 2\, v[1] + v[0]$$

906

Determining $line[j]$ as the scalar product of vectors $u$ and $v$

908

Returning line[j]

**Figure 20**

18

T

182

**COMPARISON UNIT**

**Diff**

**Response**

**Anomaly detector**

$T_0$

184

**<u>Figure 21</u>**

**Figure 22**

**(23A)**

**(23B)**

**Figure 23**

| | Europäisches Patentamt<br>European Patent Office<br>Office européen des brevets | **EUROPEAN SEARCH REPORT** | **Application Number**<br>EP 24 30 6640 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BÉGUINOT JULIEN ET AL: "Reliability of Ring Oscillator PUFs with Reduced Helper Data",<br>24 August 2023 (2023-08-24), ADVANCES IN INFORMATION AND COMPUTER SECURITY; [LECTURE NOTES IN COMPUTER SCIENCE; LECT.NOTES COMPUTER], SPRINGER NATURE SWITZERLAND, CHAM, PAGE(S) 36 - 56, XP047667780,<br>ISSN: 0302-9743<br>ISBN: 978-3-031-41325-4<br>[retrieved on 2023-08-24]<br>* abstract *<br>* section 2. * | 1-14 | INV.<br>H04L9/32 |
| Y | TEBELMANN LARS ET AL: "Side-Channel Analysis of the TERO PUF",<br>16 March 2019 (2019-03-16), CONSTRUCTIVE SIDE-CHANNEL ANALYSIS AND SECURE DESIGN; [LECTURE NOTES IN COMPUTER SCIENCE; LECT.NOTES COMPUTER], SPRINGER INTERNATIONAL PUBLISHING, CHAM, PAGE(S) 43 - 60, XP047686986,<br>ISSN: 0302-9743<br>ISBN: 978-3-030-16349-5<br>[retrieved on 2019-03-16]<br>* abstract *<br>* Section 2 * | 1-14 | TECHNICAL FIELDS SEARCHED (IPC)<br><br>H04L |

-----

-/--

The present search report has been drawn up for all claims

| Place of search | Date of completion of the search | Examiner |
|---|---|---|
| Munich | 7 April 2025 | Wolters, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                        

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 30 6640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | TEBELMANN LARS ET AL: "Interleaved Challenge Loop PUF: A Highly Side-Channel Protected Oscillator-Based PUF", IEEE TRANSACTIONS ON CIRCUITS AND SYSTEMS I: REGULAR PAPERS, IEEE, US, vol. 69, no. 12, 1 December 2022 (2022-12-01), pages 5121-5134, XP011930155, ISSN: 1549-8328, DOI: 10.1109/TCSI.2022.3208325 [retrieved on 2022-09-28] * abstract * * Section IV * ----- | 1-14 | |
| A | ABDULAZIZ AL-MEER ET AL: "Physical Unclonable Functions (PUF) for IoT Devices", ARXIV.ORG, CORNELL UNIVERSITY LIBRARY, 201 OLIN LIBRARY CORNELL UNIVERSITY ITHACA, NY 14853, 17 May 2022 (2022-05-17), XP091227761, * abstract * * Section 5 * ----- | 1-14 | **TECHNICAL FIELDS SEARCHED (IPC)** |
| A | HUANG ZHENGFENG ET AL: "Design Guidelines and Feedback Structure of Ring Oscillator PUF for Performance Improvement", IEEE TRANSACTIONS ON COMPUTER-AIDED DESIGN OF INTEGRATED CIRCUITS AND SYSTEMS, IEEE, USA, vol. 43, no. 1, 1 August 2023 (2023-08-01), pages 71-84, XP011956724, ISSN: 0278-0070, DOI: 10.1109/TCAD.2023.3301386 [retrieved on 2023-08-02] * abstract * * Section III * ----- | 1-14 | |

The present search report has been drawn up for all claims

| Place of search | Date of completion of the search | Examiner |
|---|---|---|
| Munich | 7 April 2025 | Wolters, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*


**Patent documents cited in the description**

- FR 2955394

- US 11038680 B2


**Non-patent literature cited in the description**

- **LARS TEBELMANN** ; **JEAN-LUC DANGER** ; **MICHAEL PEHL**. Self-secured PUF: Protecting the Loop PUF by Masking. *COSADE*, 2020, 293-314
- **DANIEL E. HOLCOMB** ; **WAYNE P. BURLESON** ; **KEVIN FU**. Power-Up SRAM State as an Identifying Fingerprint and Source of True Random Numbers. *IEEE Trans. Computers*, 2009, vol. 58 (9), 1198-1210
- **SANDEEP S. KUMAR** ; **JORGE GUAJARDO** ; **ROEL MAES** ; **GEERT JAN SCHRIJEN**. Pim Tuyls: The Butterfly PUF: Protecting IP on every FPGA. *HOST*, 2008, 67-70
- **J.B. JOHNSON**. *Thermal Agitation of Electricity in Conductors*, July 1928, 97-109, https://link.aps.org/doi/10.1103/PhysRev.32.97
- **W. SCHOTTKY**. Über spontane Stromschwankungen in verschiedenen Elektrizitatsleitern. *Annalen der Physik*, 1918, vol. 362, 541-567
- **A. HAJIMIRI** ; **S. LIMOTYRAKIS** ; **T. LEE**. Jitter and phase noise in ring oscillators. *IEEE Journal of Solid-State Circuits*, 1999, vol. 34 (6), 790-804
- **TREVOR KROEGER** ; **WEI CHENG** ; **SYLVAIN GUILLEY** ; **JEAN-LUC DANGER** ; **NAGHMEH KARIMI**. Assessment and Mitigation of Power Side-Channel-Based Cross-PUF Attacks on Arbiter-PUFs and Their Derivatives. *IEEE Trans. Very Large Scale Integr. Syst.*, 2022, vol. 30 (2), 187-200
- **PIERRE BAYON** ; **LILIAN BOSSUET** ; **ALAIN AUBERT** ; **VIKTOR FISCHER** ; **FRANÇOIS POUCHERET** ; **BRUNO ROBISSON** ; **PHILIPPE MAURINE**. Contactless Electromagnetic Active Attack on Ring Oscillator Based True Random Number Generator. *COSADE*, 2012, 151-166
- **MENG-YI WU** ; **TSAO-HSIN YANG** ; **LUN-CHUN CHEN** ; **CHI-CHANG LIN** ; **HAO-CHUN HU** ; **FANG-YING SU** ; **CHIH-MIN WANG** ; **JAMES PO-HAO HUANG** ; **HSIN-MING CHEN** ; **CHRIS CHUN-HUNG LU**. A PUF scheme using competing oxide rupture with bit error rate approaching zero.. *ISSCC*, 2018, 130-132

- **BLAISE GASSEND** ; **DWAINE E. CLARKE** ; **MARTEN VAN DIJK** ; **SRINIVAS DEVADAS**. Delay-Based Circuit Authentication and Applications. *SAC*, 2003, 294-301
- **G. EDWARD SUH** ; **SRINIVAS DEVADAS**. Physical Unclonable Functions for Device Authentication and Secret Key Generation. *DAC*, 2007, 9-14
- **ZOUHA CHERIF** ; **JEAN-LUC DANGER** ; **SYLVAIN GUILLEY** ; **LILIAN BOSSUET**. An easy-to-design PUF based on a single oscillator: The loop PUF. *Proc. 15th Euromicro Conf. Digit. Syst. Design*, September 2012, 156-162
- **JEAN-LUC DANGER** ; **SYLVAIN GUILLEY** ; **ALEXANDER SCHAUB**. Two-metric helper data for highly robust and secure delay PUFs. *Proc. IEEE 8th Int. Workshop Adv. Sensors Interfaces (IWASI)*, June 2019, 184-188
- **ALEXANDER SCHAUB** ; **JEAN-LUC DANGER** ; **OLIVIER RIOUL** ; **SYLVAIN GUILLEY**. The Big Picture of Delay-PUF Dependability. *ECCTD*, 2020
- Self-secured PUF: Protecting the loop PUF by masking. **LARS TEBELMANN** ; **JEAN-LUC DANGER** ; **MICHAEL PEHL**. Constructive Side-Channel Analysis and Secure Design. Cham, Switzerland: Springer, 2020, 293-314
- **LARS TEBELMANN** ; **JEAN-LUC DANGER** ; **MICHAEL PEHL**. Interleaved Challenge Loop PUF: A Highly Side-Channel Protected Oscillator-Based PUF. *IEEE Trans. Circuits Syst. I Regul. Pap.*, 2022, vol. 69 (12), 5121-5134
- **JULIEN BÉGUINOT** ; **WEI CHENG** ; **JEAN-LUC DANGER** ; **SYLVAIN GUILLEY** ; **OLIVIER RIOUL** ; **VILLE YLI-MÄYRY**. Reliability of Ring Oscillator PUFs with Reduced Helper Data. *IWSEC*, 2023, 36-56
- Testing and reliability enhancement of security primitives: Methodology and experimental validation. **MD TOUFIQ HASAN ANIK** ; **JEAN-LUC DANGER** ; **OMAR DIANKHA** ; **MOHAMMAD EBRAHIMABADI** ; **CHRISTOPH FRISCH** ; **SYLVAIN GUILLEY** ; **NAGHMEH KARIMI** ; **MICHAEL PEHL** ; **SOFIANE TAKARABT**. Journal of Microelectronics Reliability. Elsevier, 2023

- **SYLVAIN GUILLEY** ; **JEAN-LUC DANGER** ; **MICHEAL PEHL** ; **SOPHIANE SENNI** ; **YOUSSEF SOUISSI**. Highly Reliable PUFs for Embedded Systems, Protected Against Tampering. *INISCOM 2021, the 7th EAI International Conference on Industrial Networks and Intelligent Systems.*, 22 April 2021

- **OLIVIER RIOUL** ; **PATRICK SOLÉ** ; **SYLVAIN GUILLEY** ; **JEAN-LUC DANGER**. On the entropy of Physically Unclonable Functions. *ISIT*, 2016, 2928-2932
- Self-secured PUF: Protecting the loop PUF by masking. **LARS TEBELMANN** ; **JEAN-LUC DANGER** ; **MICHAEL PEHL**. Constructive Side-Channel Analysis and Secure Design. Springer, 2020, 293-314